# FASCICULE DE BREVET EUROPEEN

(11) **EP 3 996 245 B1**
(45) Date de publication et mention de la délivrance du brevet: **29.03.2023**
(21) Numéro de dépôt: 21194076.2
(22) Date de dépôt: 31.08.2021
(51) Int. Cl.: H02J 50/20, B64C 39/02, H02J 50/40, H02J 50/90

(54) **SYSTEME ET PROCEDE D'ALIMENTATION EN ENERGIE ELECTRIQUE D'UN AERONEF A DISTANCE**
SYSTEM UND VERFAHREN ZUR FERNVERSORGUNG EINES LUFTFAHRZEUGS MIT STROM
SYSTEM AND METHOD FOR REMOTELY SUPPLYING ELECTRICAL ENERGY TO AN AIRCRAFT

(30) Priorité: 10.11.2020 FR 2011512
(43) Date de publication de la demande: 11.05.2022
(73) Titulaire: Airbus Helicopters, 13725 Marignane Cedex (FR)
(72) Inventeur: FILIAS, François-Xavier, 13330 PELISSANNE (FR)
(74) Mandataire: GPI Brevets

(56) Documents cités:
- EP-A1- 2 800 241
- WO-A1-95/12237
- US-A1- 2010 079 009
- US-A1- 2017 285 627
- US-A1- 2018 229 859
- US-A1- 2019 173 324
- US-A1- 2020 036 434

## Description

La présente invention est du domaine de l'alimentation en énergie d'un véhicule et en particulier d'un aéronef à propulsion électrique.

La présente invention concerne un système et un procédé d'alimentation en énergie électrique d'un aéronef à distance.

Un aéronef peut comporter un ou plusieurs rotors constituant une ou plusieurs voilures tournantes et assurant au moins partiellement la sustentation et/ou la propulsion de l'aéronef. Un tel aéronef comporte aussi une installation motrice destinée à entraîner en rotation chaque rotor de l'aéronef et à assurer la propulsion de l'aéronef.

En outre, un aéronef peut comporter un pilote humain embarqué ou à distance, ou encore un système de pilotage automatique. Un aéronef sans pilote embarqué est usuellement dénommé « drone ». Un aéronef sans pilote embarqué peut ainsi être piloté à distance ou bien peut évoluer de façon autonome sur un parcours prédéterminé par exemple.

Les déplacements d'un aéronef effectués en ville ou à proximité d'une ville, et donc au-dessus de zones potentiellement à fortes densités de population, peuvent être effectués dans le respect de l'environnement, à savoir en limitant les émissions polluantes et sonores. A ce titre, une installation motrice électrique, voire hybride, est intéressante pour une telle application.

Une installation motrice purement électrique d'un aéronef peut comporter un ou plusieurs moteurs électriques ainsi qu'une ou plusieurs sources d'énergie électrique destinées à alimenter en énergie électrique chaque moteur électrique. Une source d'énergie électrique peut comporter un dispositif de stockage d'énergie électrique rechargeable tel qu'une batterie ou un supercondensateur par exemple. Une source d'énergie électrique peut aussi comporter un générateur électrique. Un tel générateur électrique peut être muni d'une pile à combustible consommant par exemple de l'hydrogène pour produire une énergie électrique ou encore être mis en mouvement par une machine thermique dans le cadre d'une installation motrice dite « hybride ».

Cependant, certaines sources d'énergie électrique, et en particulier les dispositifs de stockage de type batterie ou encore les piles à combustible, ont une faible densité énergétique par rapport aux sources fossiles. En conséquence, la masse des sources d'énergie électrique d'un aéronef à moteur électrique est importante et tend à limiter l'autonomie de cet aéronef et/ou la charge utile transportable voire le cas échéant le nombre de passagers.

De fait, bien que des déplacements urbains, péri-urbains, voire interurbains soient généralement de courtes durées, les sources d'énergie électrique nécessaires à un tel déplacement peuvent induire un coût opérationnel de l'aéronef important.

Toutefois, des solutions existent pour alimenter électriquement un appareil ou recharger un dispositif de stockage d'énergie électrique rechargeable sans connexion filaire. Par exemple, un système à induction électromagnétique permet un tel transfert d'énergie entre deux appareils.

Des systèmes à induction électromagnétique connus sont utilisés pour transférer une énergie électrique entre deux appareils très proche l'un de l'autre, par exemple pour la recharge d'un téléphone portable ou d'une brosse à dents électrique.

Des systèmes à induction électromagnétique utilisables à des distances plus importantes pour alimenter en énergie électrique un aéronef en vol sont décrits dans les documents US 7714536, WO 95/11828, US 6919847, FR 2623469 et US 3434678.

Le document US 7714536 décrit un procédé et un système permettant le transfert d'énergie électrique entre une ligne électrique aérienne et un drone pour recharger une batterie du drone. Un dispositif de charge inductive génère un courant électrique de charge en utilisant le champ électromagnétique émis par la ligne électrique aérienne. Un capteur peut permettre de détecter la présence d'une ligne électrique aérienne.

Les documents WO 95/11828, US 6919847, FR 2623469 et US 3434678 décrivent des aéronefs recevant une énergie transmise par des ondes millimétriques, dites également « micro-ondes », à une fréquence comprise entre 30 et 145 Gigahertz (30 et 145 GHz) depuis une station au sol, voire en vol. L'aéronef comporte une antenne redresseuse pour recevoir les ondes millimétriques et les transformer en courant électrique afin d'alimenter une installation motrice.

Le document US 3434678 décrit plus précisément une antenne redresseuse pour la réception d'ondes électromagnétiques à haute fréquence, à savoir des ondes millimétriques, et leur transformation en courant électrique. Cette antenne redresseuse comporte une pluralité de dispositifs redresseurs à semiconducteurs, à savoir un réseau de ponts de diodes. Ce réseau de ponts de diode peut être assemblé sur un matériau flexible, de préférence perméable à l'énergie électromagnétique.

Les documents WO 95/11828 et WO 95/12237 décrivent un aéronef sans occupant piloté à distance et destiné à voler plusieurs mois à hautes altitudes. Un signal de suivi de l'aéronef fournit sa position afin de focaliser un faisceau d'ondes millimétriques émis par une station au sol au centre d'une antenne redresseuse de grande taille agencée sur une face inférieure de l'aéronef. Des batteries de stockage d'énergie électrique sont utilisées pour alimenter le système de commande de vol. Des batteries sont également utilisées pour alimenter des moteurs en cas de perte du faisceau de micro-ondes. Des systèmes de protection, formés par une enceinte métallique, assurent la protection d'un ordinateur et du système de commande de vol contre les ondes millimétriques.

La station au sol utilise des systèmes de suivi de l'avion afin de focaliser le faisceau d'énergie sur l'antenne redresseuse de l'avion. L'aéronef vole dans un champ proche de l'antenne émettrice de la station au sol et se déplace en formant un « 8 » centré au dessus de l'antenne émettrice. Une partie de l'antenne émettrice peut être déplacée pour focaliser le faisceau d'ondes sur l'antenne redresseuse de l'avion. L'avion peut de plus comporter une ou plusieurs antennes utilisées pour transmettre des signaux d'informations entre des stations au sol, entre un satellite, un avion et/ou une station au sol.

Le document US 6919847 décrit un procédé et un système de transfert d'énergie par des ondes millimétriques d'un premier système disposé au sol ou en vol vers une plate-forme suspendue à haute altitude. Le suivi de la plate-forme suspendue peut être effectué par un transpondeur équipant la plate-forme ou par un suivi radar.

Le document FR 2623469 décrit un aéronef suivant une trajectoire circulaire à haute altitude et alimenté électriquement à distance par plusieurs antennes générant des faisceaux de micro-ondes. L'aéronef comporte également une surface de protection contre les radiations des ondes millimétriques.

Le document US 2019/0173324 décrit un système et des procédés pour fournir une alimentation à distance à un dispositif cible, par exemple un robot un ordinateur portable ou un véhicule tel un drone, à l'aide d'un rayonnement électromagnétique en utilisant une grande variété de bandes de fréquences pour la convertir en énergie électrique. La cible comporte un récepteur pour recevoir le rayonnement électromagnétique, ce récepteur pouvant pivoter pour améliorer la réception de puissance du rayonnement électromagnétique. La forme du rayonnement électromagnétique peut être adapté en fonction de la position du dispositif cible par rapport à l'émetteur et/ou d'une caractéristique de puissance de la cible ou du récepteur

Le document EP 2800241 décrit un système de transfert d'énergie sans fil comprenant un récepteur et un émetteur orientable. L'énergie transmise par l'émetteur est fonction de la distance entre le récepteur et l'émetteur. Ce système de transfert d'énergie sans fil peut aussi comporter un mécanisme de commande contrôlant l'orientation du récepteur. Le récepteur peut être positionné sur un téléphone portable, un appareil électroménager, un véhicule électrique... Le transfert d'énergie peut être effectué par l'intermédiaire d'un champ magnétique, d'un champ électrique ou encore d'ondes électromagnétiques.

Le document US 2010/0079009 décrit une source d'alimentation comprenant un dispositif de localisation et un émetteur configuré pour alimenter un récepteur, éventuellement mobile. Le dispositif de localisation peut recevoir un signal relatif à une demande de puissance du récepteur comprenant des informations telles que les besoins en puissance. La source d'alimentation peut en outre comprendre une unité de décision configurée pour déterminer s'il faut transmettre de la puissance à partir de l'émetteur. L'énergie peut être transmise avec un faisceau de puissance de type électromagnétique, par exemple un faisceau laser. Le faisceau de puissance provenant de la source d'alimentation peut servir d'onde porteuse pour la transmission de données, ou la transmission de données peut être séparée du faisceau de puissance. Un émetteur peut aussi alimenter simultanément plusieurs récepteurs par l'intermédiaire de plusieurs faisceaux distincts. En outre, une source d'alimentation peut comporter une pluralité d'émetteurs, et l'unité de décision peut désigner l'émetteur alimentant le dispositif de réception, par exemple le plus proche ou celui pouvant répondre au besoin de puissance.

Le document US 2020/0036434 décrit une plate-forme de haute altitude sustentée par un ballon et alimentée électriquement à distance par un faisceau laser ou de micro-ondes émis par une station au sol. La plate-forme comporte une antenne de redressement pour convertir le faisceau reçu en énergie électrique. La plate-forme est géostationnaire et comporte des dispositifs de déplacement pour la maintenir à sa position. Plusieurs émetteurs de faisceau peuvent être utilisés afin que certains faisceaux soient désactivés pendant que des objets, tels que des avions ou des oiseaux, les traversent, tandis que d'autres faisceaux maintiennent une alimentation électrique continue de la plate-forme. La plate-forme comporte des batteries pour pouvoir être alimentée électriquement en cas d'arrêt de l'émission d'un faisceau.

Le document US 2017/0285627 décrit un système de positionnement comprenant un véhicule aérien sans pilote muni d'un récepteur d'un rayonnement électromagnétique et d'un dispositif de commande ainsi qu'une station au sol comprenant un émetteur de rayonnement électromagnétique configuré pour émettre un signal électromagnétique en direction du véhicule aérien. Le véhicule aérien peut être un aéronef multirotor, un dirigeable ou un autre aéronef. La station au sol peut être mobile, par exemple un véhicule roulant, voire aquatique.

Il est noté que le document de l'Art antérieur ci-haut US2019/173324 A1 divulgue le préambule de la revendication indépendante 1.

La présente invention a alors pour but de proposer une solution alternative pour l'alimentation électrique à distance d'un ou plusieurs aéronefs en vol. La présente invention vise un système et un procédé d'alimentation à distance d'un aéronef. La présente invention vise également un procédé de déplacement d'un aéronef selon un cheminement avec une alimentation à distance de l'aéronef en énergie électrique.

La présente invention a par exemple pour objet un système pour alimenter en énergie électrique un aéronef à distance, le système comportant :
- au moins une station d'alimentation reliée à une source d'énergie électrique et munie d'une antenne émettrice configurée pour émettre des ondes électromagnétiques, et
- une antenne réceptrice configurée pour être portée par l'aéronef, l'antenne réceptrice étant configurée pour recevoir les ondes électromagnétiques et pour les transformer en un courant électrique alimentant une installation motrice de l'aéronef.

Le système selon l'invention est remarquable en ce qu'il comporte un dispositif de localisation, configuré pour localiser l'aéronef par rapport à l'antenne émettrice, et un dispositif de déplacement pour déplacer une antenne parmi l'antenne émettrice et l'antenne réceptrice en fonction de la position de l'autre antenne parmi l'antenne émettrice et l'antenne réceptrice.

Ledit système comporte une pluralité de stations d'alimentation définissant un cheminement suivi par ledit aéronef, chaque station d'alimentation couvrant un segment; dudit cheminement, ladite antenne réceptrice étant toujours dans le champ de ladite antenne émettrice d'au moins une station d'alimentation le long dudit cheminement.

L'aéronef est muni d'une installation motrice comportant au moins un moteur électrique participant à la propulsion de l'aéronef. L'installation motrice peut être purement électrique et comporter à ce titre uniquement un ou plusieurs moteurs électriques. L'installation motrice peut aussi être hybride et comporter d'une part un ou plusieurs moteurs électriques et d'autre part au moins une machine thermique destinée soit à la propulsion de l'aéronef, soit à la fourniture d'un courant électrique via une machine électrique fonctionnant en mode générateur.

Le dispositif de localisation permet de localiser l'aéronef, et donc l'antenne réceptrice, par rapport à la station d'alimentation, et donc à l'antenne émettrice soit en déterminant directement la position relative de l'aéronef par rapport à la station d'alimentation, soit à partir des coordonnées absolues de l'aéronef et de l'antenne émettrice dans un repère terrestre.

Le dispositif de déplacement peut être agencé sur ladite au moins une station d'alimentation. Le dispositif de déplacement comporte alors un actionneur afin d'orienter l'antenne émettrice en fonction de la position relative de l'aéronef, et donc de l'antenne réceptrice de l'aéronef, par rapport à la station d'alimentation, et donc à l'antenne émettrice.

Le dispositif de déplacement peut aussi être agencé sur l'aéronef.

Par exemple, le dispositif de déplacement comporte un actionneur pour orienter l'antenne réceptrice en fonction de la position relative de l'aéronef par rapport à l'antenne émettrice.

Selon un autre exemple, le dispositif de déplacement peut également provoquer un déplacement de l'aéronef lui-même, l'antenne réceptrice étant alors fixe par rapport à l'aéronef. Le déplacement de l'aéronef permet d'orienter l'antenne réceptrice par rapport à l'antenne émettrice. Le dispositif de déplacement comporte alors un système de pilotage automatique commandant de façon automatique les déplacements de l'aéronef.

Dans tous les cas, le dispositif de déplacement est relié au dispositif de localisation, par une liaison filaire ou sans fil, afin de prendre en compte la position relative de l'aéronef, et donc de l'antenne réceptrice, par rapport à la station d'alimentation, et donc à l'antenne émettrice.

De la sorte, l'antenne émettrice émet toujours les ondes électromagnétiques en direction de l'antenne réceptrice de l'aéronef, quelle que soit la position relative de l'antenne réceptrice par rapport à l'antenne émettrice. De même, l'antenne réceptrice est toujours en position de recevoir les ondes électromagnétiques émises par l'antenne émettrice et de les transformer en un courant électrique destiné à alimenter électriquement l'installation motrice de l'aéronef.

L'installation motrice de l'aéronef peut ainsi être alimentée en courant électrique à distance par l'intermédiaire des ondes électromagnétiques reçues par l'antenne réceptrice de l'aéronef. L'aéronef peut de la sorte être propulsé par l'intermédiaire de moteur(s) électrique(s) grâce à une source d'énergie électrique externe, à savoir une station d'alimentation. La distance entre l'antenne réceptrice et l'antenne émettrice, et donc entre l'aéronef et la station d'alimentation, peut être par exemple de quelques mètres et atteindre plusieurs centaines de mètres également, notamment en fonction des dimensions de l'antenne émettrice et de l'antenne réceptrice.

En conséquence, l'aéronef peut évoluer en limitant les émissions polluantes pour l'environnement, à savoir en limitant les bruits générés et sans émettre de gaz d'échappement susceptibles d'être considérés comme polluants. L'aéronef peut aussi effectuer des vols de longue durée avec une alimentation électrique continue fournie par au moins une station d'alimentation.

De plus, l'alimentation électrique de l'aéronef par une source d'énergie électrique externe permet avantageusement de réduire la masse de l'aéronef en limitant les dimensions d'une éventuelle source d'énergie électrique embarquée, voire en la supprimant.

Selon un autre aspect, les ondes électromagnétiques peuvent être de différents types.

Par exemple, les ondes électromagnétiques peuvent être formées par un faisceau laser de puissance, l'antenne émettrice comportant alors un générateur de faisceau laser. Ce faisceau laser est un faisceau de rayonnement spatialement et temporellement cohérent et susceptible de contenir une quantité de puissance. L'antenne réceptrice comporte alors des récepteurs transducteurs photovoltaïques, agencés par exemple sous la forme d'un ou de plusieurs panneaux photovoltaïques, afin de recevoir ces ondes électromagnétiques et de les transformer en un courant électrique de façon usuelle et connue.

Selon un autre exemple, les ondes électromagnétiques peuvent être formées par des ondes millimétriques à hautes fréquences, l'antenne émettrice comportant alors un générateur d'ondes millimétriques. Les ondes millimétriques ont une fréquence pouvant être comprise entre 2 et 90 gigahertz et sont susceptibles de contenir une énergie électromagnétique. L'antenne réceptrice peut comporter alors au moins une antenne redresseuse afin de recevoir ces ondes millimétriques à hautes fréquences et de les transformer par induction électromagnétique en un courant électrique de façon usuelle et connue. Une antenne redresseuse comporte par exemple des ponts de diodes pour transformer les ondes millimétriques en un courant électrique continu.

L'antenne émettrice peut alors comporter une parabole par exemple afin de concentrer les ondes millimétriques.

De plus, chaque station d'alimentation peut comporter un blindage électromagnétique configuré pour protéger l'environnement de chaque station d'alimentation des ondes millimétriques.

L'antenne émettrice peut aussi comporter un dispositif de protection configuré pour protéger l'environnement de l'antenne émettrice. Le dispositif de protection peut être agencé sur l'antenne émettrice afin d'améliorer la convergence du faisceau des ondes millimétriques et d'éviter notamment la propagation de lobes secondaires, désignés également « émissions secondaires », issus des ondes millimétriques.

Le système selon l'invention peut de plus comprendre une ou plusieurs des caractéristiques qui suivent, prises seules ou en combinaison.

Selon une possibilité, le dispositif de localisation peut comporter un premier dispositif de localisation par satellites agencé sur l'aéronef, un second dispositif de localisation par satellites agencé sur ladite au moins une station d'alimentation, un dispositif de communication permettant un échange d'informations entre ladite au moins une station d'alimentation et l'aéronef ainsi qu'un calculateur déterminant une position relative de l'aéronef, et donc de l'antenne réceptrice, par rapport à ladite au moins une station d'alimentation, et donc à l'antenne émettrice.

Le premier dispositif de localisation est configuré pour fournir les coordonnées de l'aéronef dans un repère terrestre. Le second dispositif de localisation est configuré pour estimer les coordonnées de ladite au moins une station d'alimentation dans le repère terrestre. Le dispositif de communication permet un transfert des coordonnées dans le repère terrestre de l'aéronef et/ou de ladite au moins une station d'alimentation entre ladite au moins une station d'alimentation et l'aéronef. Le dispositif de communication peut dans ce but comporter un premier émetteur-récepteur agencé sur l'aéronef et un second émetteur-récepteur agencé sur ladite au moins une station d'alimentation et coopérant avec le premier émetteur-récepteur.

Enfin, le calculateur est relié au premier émetteur-récepteur et/ou au second émetteur-récepteur. Ce calculateur est configuré pour déterminer une position relative de l'aéronef par rapport à ladite au moins une station d'alimentation, à partir des coordonnées dans le repère terrestre de l'aéronef et de ladite au moins une station d'alimentation. Le calculateur peut être agencé sur l'aéronef ou sur ladite au moins une station d'alimentation et peut être relié par une liaison filaire ou une liaison non filaire au premier émetteur-récepteur ou au second émetteur-récepteur.

Selon une autre possibilité, ladite au moins une station d'alimentation peut être fixe et ses coordonnées dans un repère terrestre sont par exemple stockées dans une mémoire du calculateur. Le dispositif de localisation peut alors comporter un premier dispositif de localisation par satellites agencé sur l'aéronef, un dispositif de communication permettant un échange d'informations entre ladite au moins une station d'alimentation et l'aéronef ainsi qu'un calculateur déterminant une position relative de l'aéronef par rapport à ladite au moins une station d'alimentation. Le premier dispositif de localisation est configuré pour fournir les coordonnées de l'aéronef dans le repère terrestre.

Selon une possibilité compatible avec les précédentes, le dispositif de localisation peut comporter un dispositif de localisation relative agencé sur l'aéronef ou sur la station d'alimentation. Le dispositif de localisation relative est configuré pour fournir directement une position relative de l'aéronef par rapport à ladite au moins une station d'alimentation.

Le dispositif de localisation relative peut comporter un dispositif de type optique, de type radar ou un dispositif à ultrasons.

Le dispositif de localisation relative peut également utiliser la quantité d'énergie reçue par l'antenne réceptrice comparée à un seuil d'énergie minimum fonction de l'énergie contenue dans les ondes électromagnétiques émises par l'antenne émettrice.

Selon une possibilité compatible avec les précédentes, le système selon l'invention peut comporter un dispositif de localisation de secours configuré pour fournir une position relative de l'aéronef par rapport à ladite au moins une station d'alimentation en cas de dysfonctionnement du dispositif de localisation. Le dispositif de localisation de secours peut être agencé sur l'aéronef ou sur ladite au moins une station d'alimentation. Le dispositif de localisation de secours peut comporter un dispositif de type optique, un dispositif de type radar ou un dispositif à ultrasons par exemple.

Le dispositif de localisation de secours peut également utiliser une trajectoire prévisionnelle de l'aéronef afin d'estimer les positions prédictives successives de l'aéronef par rapport à ladite au moins une station d'alimentation à partir de l'instant de dysfonctionnement du dispositif de localisation.

Selon une possibilité compatible avec les précédentes, chaque station d'alimentation peut comporter un dispositif de gestion d'énergie pour gérer une quantité d'énergie contenue dans les ondes électromagnétiques émises par l'antenne émettrice. En effet, cette énergie contenue dans les ondes électromagnétiques peut être optimisée afin que la quantité d'énergie reçue par l'antenne émettrice soit sensiblement égale au besoin en énergie de l'aéronef. La quantité d'énergie reçue par l'antenne émettrice est fonction d'une part d'une distance entre l'antenne réceptrice et l'antenne émettrice et d'autre part de l'énergie contenue dans les ondes électromagnétiques émises par l'antenne émettrice.

En outre, le besoin en énergie de l'aéronef peut être prédéfini et préalablement mémorisé dans le système selon l'invention. Ce besoin en énergie de l'aéronef peut également être fourni par l'aéronef en temps réel au système selon l'invention ou à la station d'alimentation par l'intermédiaire d'un dispositif de communication. De plus, la distance entre l'antenne réceptrice et l'antenne émettrice peut être déterminée en fonction de la position relative de l'antenne réceptrice par rapport à l'antenne émettrice fournie par le dispositif de localisation. Dès lors, connaissant le besoin en énergie de l'aéronef et la distance entre l'antenne réceptrice et l'antenne émettrice, le dispositif de gestion d'énergie peut déterminer la quantité d'énergie que doivent porter les ondes électromagnétiques émises par l'antenne émettrice de sorte que l'antenne réceptrice reçoive des ondes électromagnétiques adaptées et optimisées, à savoir portant la quantité d'énergie requise sensiblement égale au besoin de l'aéronef.

Selon une possibilité compatible avec les précédentes, l'antenne réceptrice peut être agencée sur une ou plusieurs surfaces d'un fuselage de l'aéronef.

Par exemple, l'antenne réceptrice peut être agencée sur une surface inférieure d'un fuselage de l'aéronef, à savoir une surface en regard avec le sol. En conséquence, l'antenne émettrice est dirigé vers le haut et donc vers le ciel afin que les ondes électromagnétiques soient dirigées vers l'antenne réceptrice située sur une surface inférieure du fuselage de l'aéronef en vol. Dès lors, les ondes électromagnétiques ne sont pas dirigées vers des zones habitées ou susceptibles de l'être.

Par exemple, les ondes électromagnétiques sont émises selon une direction formant avec un plan horizontal un angle supérieur ou égal à un angle minimum. L'angle minimum est par exemple égal à 7°.

De plus, l'antenne réceptrice peut comporter un écran de protection agencé entre la surface inférieure du fuselage de l'aéronef et une zone supérieure de l'aéronef. Cet écran de protection permet de protéger du matériel électronique, au moins un occupant et/ou une charge utile pouvant se situer dans cette zone supérieure du fuselage des effets des ondes électromagnétiques.

Lorsque les ondes électromagnétiques sont formées par un faisceau laser de puissance, l'antenne réceptrice comportant alors des récepteurs transducteurs photovoltaïques, l'écran de protection est agencé au-dessus des récepteurs transducteurs photovoltaïques, entre les récepteurs transducteurs photovoltaïques et la zone supérieure de l'aéronef. L'écran de protection peut comporter un bouclier thermique.

Lorsque les ondes électromagnétiques sont formées par des ondes millimétriques à hautes fréquences, l'antenne réceptrice comportant alors une antenne redresseuse, l'écran de protection agencé au-dessus de l'antenne redresseuse, entre l'antenne redresseuse et la zone supérieure de l'aéronef. L'écran de protection peut comporter un blindage électromagnétique.

Selon une possibilité compatible avec les précédentes, une station d'alimentation peut être agencée par exemple sur le toit d'un bâtiment, sur un pylône supportant une ligne de transport de courant électrique à haute tension ou à très haute tension par exemple, ainsi que sur un terrain d'atterrissage, désigné également « hélipad ». Une station d'alimentation peut encore être agencée sur un véhicule, par exemple un aéronef, un camion ou un navire.

Une station d'alimentation peut aussi être configurée pour être reliée et agencée sur une ligne de transport de courant électrique à haute tension ou à très haute tension. Une station d'alimentation peut par exemple être agencée directement sur la ligne de transport de courant électrique ou bien entre deux lignes de transport de courant électrique.

Selon une possibilité compatible avec les précédentes, le système selon l'invention peut comporter une seule station d'alimentation et l'aéronef vole sensiblement au-dessus de cette station d'alimentation.

Le dispositif de déplacement peut être agencé sur cette station d'alimentation et comporter au moins un actionneur afin d'orienter l'antenne émettrice vers l'aéronef et l'antenne réceptrice en fonction de la position relative de l'aéronef, et donc de l'antenne réceptrice de l'aéronef, par rapport à l'antenne émettrice.

Le dispositif de déplacement peut être agencé sur l'aéronef et comporter un système de pilotage automatique de l'aéronef, le système de pilotage automatique commandant les déplacements de l'aéronef en fonction des mouvements de la station d'alimentation afin que l'antenne réceptrice reçoive les ondes électromagnétiques émises par l'antenne émettrice de la station d'alimentation.

Le dispositif de déplacement peut aussi être agencé sur l'aéronef et comporter au moins un actionneur afin d'orienter l'antenne réceptrice en fonction de la position relative de l'aéronef, et donc de l'antenne réceptrice de l'aéronef, par rapport à l'antenne émettrice.

Par exemple, la station d'alimentation peut être configurée pour être agencée sur un navire, l'aéronef volant sensiblement au-dessus du navire. La station d'alimentation peut alors comporter un dispositif de localisation muni d'une centrale inertielle. Le dispositif de déplacement peut par exemple être agencé sur l'aéronef et piloter les déplacements de l'aéronef et/ou de l'antenne réceptrice en fonction des mouvements du navire, notamment les mouvements détectés par la centrale inertielle.

Selon une une caractéristique faisant partie de l'invention, le système peut comporter une pluralité de stations d'alimentation définissant un cheminement suivi par l'aéronef, chaque station d'alimentation couvrant un segment du cheminement afin d'alimenter un aéronef volant sur ce cheminement, l'antenne réceptrice de l'aéronef étant toujours dans le champ de l'antenne émettrice d'au moins une station d'alimentation le long de ce cheminement. On entend par « alimenter un aéronef » lui fournir une énergie sous forme électrique, ou sous une autre forme transformable en énergie électrique, par exemple par l'intermédiaire d'ondes électromagn étiques.

Le cheminement peut comporter deux hélipads situés respectivement aux deux extrémités du cheminement. Une station d'alimentation est agencée sur chaque hélipad de sorte que l'aéronef puisse décoller depuis ces hélipads et atterrir sur ces hélipads en étant alimenté par la station d'alimentation agencée sur l'hélipad concerné.

De plus, chaque station d'alimentation peut comporter un dispositif d'autorisation pour émettre un signal d'autorisation lorsque l'antenne émettrice de la station d'alimentation n'émet pas d'onde électromagnétique en direction d'une antenne réceptrice d'un aéronef. Chaque station d'alimentation peut alors comporter également un dispositif de communication transmettant le signal d'autorisation à chaque aéronef situé sur le cheminement de sorte que l'aéronef se trouvant sur un segment du cheminement soit informé si la station d'alimentation couvrant le segment suivant de ce cheminement est disponible ou est utilisée par un autre aéronef. Si la station d'alimentation couvrant le cheminement suivant est utilisée par un autre aéronef et est donc indisponible pour alimenter l'aéronef, l'aéronef peut ralentir, voire effectuer un vol stationnaire s'il en a la capacité, afin d'attendre que cette station d'alimentation initialement indisponible devienne disponible.

Toutefois, le signal d'autorisation émis par une station d'alimentation peut être transmis uniquement à chaque aéronef situé sur un cheminement adjacent au cheminement couvert par cette station d'alimentation.

En outre, deux segments adjacents du cheminement peuvent être en recouvrement au niveau d'une de leurs extrémités respectives. Dans ce cas, lorsqu'un aéronef vole sur une telle extrémité, les deux stations d'alimentation couvrant ces segments adjacents émettent simultanément des ondes électromagnétiques de sorte à alimenter simultanément et conjointement l'aéronef. Les ondes électromagnétiques émises par les deux stations d'alimentation portent alors conjointement l'énergie nécessaire au besoin de l'aéronef.

Selon une possibilité compatible avec les précédentes, chaque station d'alimentation peut comporter deux antennes émettrices afin d'alimenter simultanément deux aéronefs sur deux cheminements distincts, éventuellement deux cheminements parallèles.

Selon une possibilité compatible avec les précédentes, l'aéronef peut comporter au moins une source d'énergie électrique destinée à alimenter en énergie électrique chaque moteur électrique de l'aéronef. Cette source d'énergie électrique peut constituer une source d'énergie électrique de secours et peut permettre d'alimenter l'installation motrice de l'aéronef si l'antenne réceptrice ne reçoit pas d'onde électromagnétique émise par l'antenne émettrice ou en cas de panne de l'antenne réceptrice par exemple.

La présente invention vise également un procédé de déplacement d'un aéronef selon un cheminement avec alimentation en énergie électrique de l' aéronef à distance. L'aéronef peut comporter une installation motrice, un fuselage et une antenne réceptrice, l'antenne réceptrice étant configurée pour recevoir les ondes électromagnétiques et pour les transformer en un courant électrique pour alimenter l'installation motrice.

Ce procédé de déplacement d'un aéronef selon un cheminement avec une alimentation à distance dudit aéronef, où une pluralité de stations d'alimentation sont agencée le long dudit cheminement, chaque station d'alimentation étant munie d'une antenne émettrice reliée à une source d'énergie électrique et configurée pour émettre des ondes électromagnétiques, ledit aéronef comportant une antenne réceptrice configurée pour recevoir lesdites ondes électromagnétiques et pour les transformer en un courant électrique alimentant ledit aéronef,
ledit procédé comportant les étapes suivantes pour alimenter en énergie électrique un ledit aéronef à distance par l'intermédiaire d'au moins une station d'alimentation, chaque station d'alimentation couvrant un segment dudit cheminement de sorte que ladite antenne réceptrice soit toujours dans le champ de ladite antenne émettrice d'au moins une station d'alimentation le long dudit cheminement :
- localisation d'une antenne réceptrice de l'aéronef par rapport à une antenne émettrice d'une station d'alimentation par l'intermédiaire d'un dispositif de localisation,
- positionnement d'une antenne parmi l'antenne émettrice et l'antenne réceptrice en fonction de la position de l'autre antenne parmi l'antenne émettrice et l'antenne réceptrice,
- émission d'ondes électromagnétiques par l'intermédiaire de l'antenne émettrice d'une station d'alimentation vers l'antenne réceptrice de l'aéronef,
- réception des ondes électromagnétiques par l'intermédiaire de l'antenne réceptrice de l'aéronef,
- transformation des ondes électromagnétiques reçues par l'antenne réceptrice en un courant électrique, et
- alimentation d'une installation motrice de l'aéronef par l'intermédiaire du courant électrique au moyen d'un calculateur.

Lors de l'étape de positionnement, l'antenne émettrice peut être orientée vers l'antenne réceptrice en fonction de la position de l'antenne réceptrice par l'intermédiaire d'un dispositif de déplacement agencé sur la station d'alimentation de sorte que l'antenne réceptrice reçoive les ondes électromagnétiques émises par l'antenne émettrice.

Lors de l'étape de positionnement, l'antenne réceptrice peut être orientée vers l'antenne émettrice en fonction de la position de l'antenne émettrice en positionnant et en orientant l'antenne réceptrice par l'intermédiaire d'un dispositif de déplacement agencé sur l'aéronef, éventuellement par un déplacement de l'aéronef. L'antenne réceptrice est ainsi positionnée et orientée de sorte à recevoir les ondes électromagnétiques émises par l'antenne émettrice. Le dispositif de déplacement comporte par exemple un système de pilotage automatique de l'aéronef.

Les ondes électromagnétiques peuvent être formées par un faisceau laser de puissance ou des ondes millimétriques à hautes fréquences, par exemple à des fréquences comprises entre 2 gigahertz et 90 gigahertz.

En outre, le procédé selon l'invention peut comporter une étape d'adaptation de l'énergie contenue dans les ondes électromagnétiques, l'énergie contenue dans les ondes électromagnétiques étant fonction du besoin en énergie électrique de l'aéronef et de la distance entre l'antenne réceptrice de l'aéronef et l'antenne émettrice.

L'étape de localisation peut par ailleurs comporter les sous-étapes suivantes :
- localisation de l'antenne réceptrice dans un repère terrestre par l'intermédiaire d'un premier dispositif de localisation par satellites agencé sur l'aéronef,
- localisation de l'antenne émettrice dans le repère terrestre par l'intermédiaire d'un second dispositif de localisation par satellites agencé sur la station d'alimentation, et
- détermination d'une position relative de l'antenne réceptrice par rapport à l'antenne émettrice en fonction de la localisation de l'antenne émettrice et de la localisation de l'antenne réceptrice dans le repère terrestre.

Cette étape de localisation peut de plus comporter une sous-étape de communication entre la station d'alimentation et l'aéronef par l'intermédiaire d'un dispositif de communication. Un calculateur relié au dispositif de communication peut alors déterminer la position relative de l'antenne réceptrice par rapport à l'antenne émettrice.

De plus, le procédé selon l'invention peut comporter une étape de secours au cours de laquelle la position relative de l'antenne réceptrice par rapport à l'antenne émettrice est déterminée, l'étape de secours étant réalisée en cas d'échec de l'étape de localisation suite notamment à un dysfonctionnement du dispositif de localisation.

Cette étape de secours est réalisée par exemple par l'intermédiaire d'un dispositif de type optique, d'un dispositif de type radar ou d'un dispositif à ultrasons.

Cette étape de secours peut également déterminer la position relative de l'antenne réceptrice par rapport à l'antenne émettrice en fonction d'une estimation des positions prédictives successives de l'aéronef, et donc des positions prédictives successives de l'antenne réceptrice. Dans ce cas, l'étape de secours comporte une sous-étape d'enregistrement de la position relative de l'aéronef par rapport à la station d'alimentation et une sous-étape d'estimation pour estimer des positions prédictives successives de l'aéronef.

Lors de la sous-étape d'enregistrement, la position relative de l'aéronef par rapport à la station d'alimentation fournie par le dispositif de localisation est enregistrée par exemple dans une mémoire du calculateur, tant que le dispositif de localisation fournit cette position relative.

Ensuite, la sous-étape d'estimation est réalisée dès que le dispositif de localisation ne fournit pas de position relative. Cette sous-étape d'estimation est réalisée en utilisant la dernière position relative connue et enregistrée de l'aéronef par rapport à la station d'alimentation, par exemple juste avant un dysfonctionnement du dispositif de localisation, et une trajectoire prévisionnelle de l'aéronef préalablement définie. En effet, le système comporte une mémoire, par exemple une mémoire du calculateur, stockant un plan de vol de l'aéronef défini préalablement au vol. Le plan de vol comporte notamment une trajectoire prévisionnelle de l'aéronef. En outre, l'aéronef pouvant évoluer de façon autonome, cette trajectoire prévisionnelle est suivie de façon stricte par l'aéronef. Dès lors, le calculateur peut estimer les positions prédictives successives de l'aéronef par rapport à ladite au moins une station d'alimentation à partir de la dernière position relative connue et enregistrée de l'aéronef, le dispositif de déplacement orientant alors l'antenne réceptrice ou l'antenne émettrice en fonction de ces positions prédictives successives de l'aéronef.

La présente invention vise également un procédé de déplacement d'un aéronef selon un cheminement avec une alimentation à distance de l'aéronef.

Ce cheminement est couvert par une pluralité de stations d'alimentation agencées le long du cheminement et munies chacune d'une antenne émettrice reliée à une source d'énergie électrique et configurée chacune pour émettre des ondes électromagnétiques.

Ce procédé de déplacement applique le procédé d'alimentation précédemment décrit pour alimenter à chaque instant l'aéronef par l'intermédiaire d'au moins une station d'alimentation, chaque station d'alimentation couvrant un segment du cheminement grâce à l'antenne émettrice de sorte à alimenter l'aéronef circulant sur ce segment du cheminement. Chaque station d'alimentation peut comporter un dispositif de déplacement afin d'orienter de façon adéquate l'antenne émettrice vers l'antenne réceptrice de l'aéronef suivant les déplacements de l'aéronef.

L'invention est définie par les caractéristiques de la revendication indépendante de système 1 et la revendication indépendante de procédé 17. Les caractéristiques préférées sont définies par les revendications dépendantes.

L'invention et ses avantages apparaîtront avec plus de détails dans le cadre de la description qui suit avec des exemples donnés à titre illustratif en référence aux figures annexées qui représentent :
- la figure 1, une station d'alimentation munie d'une antenne émettrice,
- la figure 2, un aéronef muni d'une antenne réceptrice,
- la figure 3, un schéma synoptique d'un procédé d'alimentation à distance en énergie électrique d'un aéronef,
- les figures 4 à 5, un aéronef volant au-dessus de stations d'alimentation,
- la figure 6, un aéronef volant le long d'un cheminement,
- la figure 7, un aéronef volant au-dessus d'un hélipad, et
- la figure 8, un aéronef volant au-dessus d'un navire.

Les éléments présents dans plusieurs figures distinctes sont affectés d'une seule et même référence.

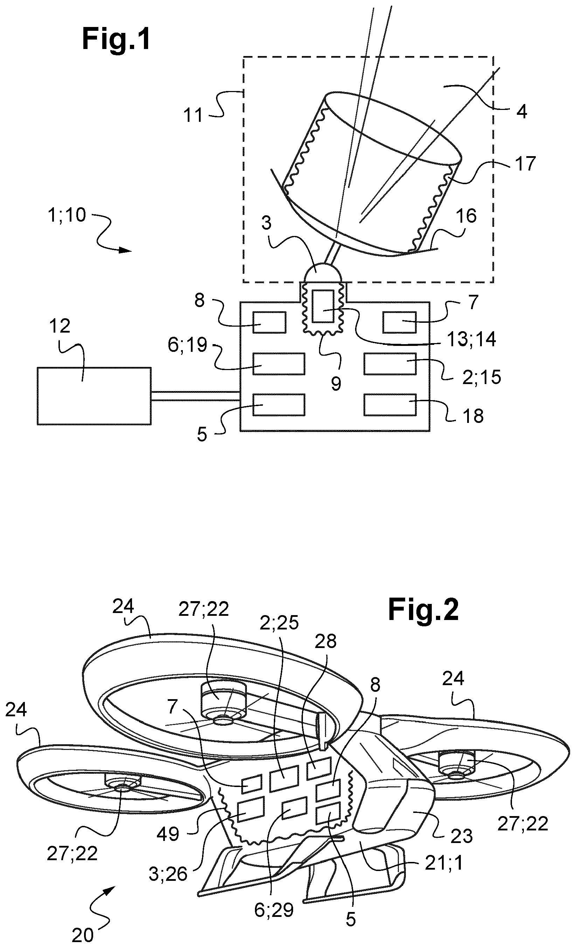

Une station d'alimentation 10 est représentée sur la figure 1. Cette station d'alimentation 10 fait partie d'un système 1 pour alimenter à distance en énergie électrique un aéronef. Cette station d'alimentation 10 comporte une antenne émettrice 11 et est reliée à une source d'énergie électrique 12. La source d'énergie électrique 12 peut comprendre par exemple un réseau d'alimentation en courant électrique, un groupe électrogène ou un dispositif de stockage d'énergie électrique comportant une ou plusieurs batteries.

L'antenne émettrice 11 est configurée pour émettre des ondes électromagnétiques 4. Les ondes électromagnétiques 4 peuvent être par exemple formées par un faisceau laser de puissance, l'antenne émettrice 11 comportant alors un générateur 13 de faisceau laser. Selon un autre exemple, les ondes électromagnétiques 4 peuvent être formées par des ondes millimétriques à hautes fréquences, comprises entre 2 gigahertz et 90 gigahertz, l'antenne émettrice 11 comportant alors un générateur 14 d'ondes millimétriques.

Lorsque les ondes électromagnétiques 4 sont formées par des ondes millimétriques, l'antenne émettrice 11 peut comporter une parabole 16 afin de faire converger les ondes électromagnétiques 4 vers une direction précise, par exemple sous la forme d'un faisceau sensiblement conique.

La station d'alimentation 10 peut alors comporter un blindage électromagnétique 9 configuré pour protéger l'environnement de la station d'alimentation 10 des ondes millimétriques générées. Le blindage électromagnétique 9 est par exemple agencé autour du générateur 14 d'ondes millimétriques, à l'exception de l'espace situé entre le générateur d'ondes millimétriques 14 et l'antenne émettrice 11. Le blindage électromagnétique 9 évite ainsi que les ondes millimétriques 4 se propagent dans des directions autres que la direction vers laquelle est dirigée l'antenne émettrice 11. Le blindage électromagnétique 9 peut comporter par exemple un matériau absorbant les ondes électromagnétiques et/ou un matériau réfléchissant de telles ondes électromagnétiques 4.

L'antenne émettrice 11 peut aussi comporter un dispositif de protection 17 configuré pour protéger l'environnement de l'antenne émettrice 11 et pour éviter notamment la propagation d'émissions secondaires issues des ondes électromagnétiques 4 dans l'environnement de l'antenne émettrice 11. Un dispositif de protection 17 peut par exemple comporter un cylindre positionné sur l'antenne émettrice 11, centré sur le faisceau des ondes millimétriques 4 et éventuellement recouvert d'un blindage électromagnétique. Un dispositif de protection 17 peut aussi comporter une lentille de Fresnel agencée sur l'antenne émettrice 11.

Une station d'alimentation 10 peut encore comporter un dispositif de gestion d'énergie 18 pour gérer l'énergie contenue dans les ondes électromagnétiques 4 émises par l'antenne émettrice 11.

Un aéronef 20 est représenté sur la figure 2. L'aéronef 20 comporte un fuselage 23, une installation motrice 22 et au moins un rotor 24 entraîné en rotation par l'installation motrice 22. Ledit au moins un rotor 24 participe à la propulsion et/ou à la sustentation de l'aéronef 20. Un aéronef 20 peut aussi comporter au moins un rotor 24, voire au moins une aile, voire au moins une hélice. Un aéronef 20 peut également comporter un rotor principal 24 agencé au dessus du fuselage 23 et destiné à sa propulsion et à sa sustentation ainsi qu'un rotor arrière anticouple agencé sur une poutre de queue de l'aéronef 20.

Quel que soit le nombre de rotors, l'aéronef 20 comporte une antenne réceptrice 21 configurée pour recevoir des ondes électromagnétiques 4 émises par l'antenne émettrice 11 d'une station d'alimentation 10 et pour transformer ces ondes électromagnétiques 4 en un courant électrique alimentant l'installation motrice 22 de l'aéronef 20. L'antenne réceptrice 21 de l'aéronef 20 fait partie du système 1 pour alimenter à distance en énergie électrique l'aéronef 20. L'antenne réceptrice 21 est par exemple agencée sur une surface du fuselage 23 de l'aéronef 20 de sorte à recevoir les ondes électromagnétiques 4 en volant au-dessus d'une ou plusieurs stations d'alimentation 10. L'antenne réceptrice 21 peut être agencée sur une surface inférieure du fuselage 23, la surface inférieure du fuselage 23 étant en regard avec le sol lorsque l'aéronef 20 est posé au sol et lorsqu'il effectue un vol en palier par exemple.

Lorsque les ondes électromagnétiques 4 sont formées par un faisceau laser de puissance, l'antenne réceptrice 21 peut comporter des récepteurs transducteurs photovoltaïques afin de transformer les ondes électromagnétiques 4 en un courant électrique.

Lorsque les ondes électromagnétiques 4 sont formées par des ondes millimétriques, l'antenne réceptrice 21 peut comporter au moins une antenne redresseuse afin de transformer les ondes électromagnétiques 4 en un courant électrique.

L'antenne réceptrice 21 peut comporter un écran de protection 49 agencé entre la surface inférieure du fuselage 23 et une zone supérieure de l'aéronef 23.

Lorsque les ondes électromagnétiques 4 sont formées par un faisceau laser de puissance, l'écran de protection 49 est agencé au-dessus des récepteurs transducteurs photovoltaïques. Cet écran de protection 49 est en particulier agencé entre les des récepteurs transducteurs photovoltaïques et une zone supérieure de l'aéronef 20. Cet écran de protection 49 peut comporter un bouclier thermique tendant à protéger la zone supérieure de l'aéronef, et notamment la charge utile, au moins un occupant et/ou du matériel électronique tel qu'un système avionique de l'aéronef 20 pouvant s'y trouver, d'échauffements pouvant être provoqués par le faisceau laser de puissance.

Lorsque les ondes électromagnétiques sont formées par des ondes millimétriques à hautes fréquences, l'écran de protection 49 est agencé au-dessus de l'antenne redresseuse. Cet écran de protection 49 est en particulier agencé entre l'antenne redresseuse et une zone supérieure de l'aéronef 20. Cet écran de protection 49 peut comporter un blindage électromagnétique tendant à protéger des ondes électromagnétiques cette zone supérieure de l'aéronef 20.

Indépendamment des aspects précédents, l'antenne réceptrice 21 peut se conformer à des formes quelconques, voire complexes, et peut donc être agencée sur une surface de grandes dimensions du fuselage 23 d'un aéronef 20, quelle que soit la forme de ce fuselage 23 et que ce fuselage 23 comporte des formes planes, concaves ou convexes.

L'antenne réceptrice 21 peut par exemple couvrir une aire de l'ordre de 10 mètres carré (10m²) pour un aéronef pouvant transporter une charge utile de quelques centaines de kilogrammes. Une telle antenne réceptrice 21 est alors capable, de générer une puissance électrique de l'ordre de 600 à 800 kilowatts à partir d'ondes millimétriques à hautes fréquences.

Indépendamment des aspects précédents, le système 1 comporte un dispositif de localisation 2 configuré pour localiser l'aéronef 20, et donc l'antenne réceptrice 21, par rapport à la station d'alimentation 10, et donc à l'antenne émettrice 11. De plus, le système 1 peut comporter un dispositif de déplacement 3 pour déplacer l'antenne émettrice 11 en fonction de la position de l'antenne réceptrice 21 ou pour déplacer l'antenne réceptrice 21 en fonction de la position de l'antenne émettrice 11.

Dès lors, l'antenne réceptrice 21 peut recevoir en permanence une énergie envoyée par au moins une station d'alimentation 10. L'aéronef 20 peut ainsi être alimenté en énergie électrique à distance par la station d'alimentation 10 de façon optimisée et voire voler avantageusement sans utiliser de source d'énergie embarquée.

Le dispositif de déplacement 3 peut être agencé sur une station d'alimentation 10 ou bien sur l'aéronef 20.

Par exemple, le dispositif de déplacement 3 peut être agencé sur une station d'alimentation 10 Le dispositif de déplacement 3 comporte par exemple un actionneur pour orienter l'antenne émettrice 11 en fonction de la position de l'antenne réceptrice 21 de l'aéronef 20 de sorte que l'antenne émettrice 11 émette les ondes électromagnétiques 4 en direction de l'antenne réceptrice 21. Le dispositif de déplacement 3 permet par exemple des rotations de l'antenne émettrice 11 autour de trois directions distinctes.

Selon un autre exemple, le dispositif de déplacement 3 peut être agencé sur l'aéronef 20. Le dispositif de déplacement 3 comporte par exemple un actionneur pour orienter l'antenne réceptrice 21 autour d'au moins deux directions distinctes, voire autour de trois directions distinctes, en fonction de la position de l'antenne émettrice 11 et de l'aéronef 20 de sorte que l'antenne émettrice 11 émette les ondes électromagnétiques 4 en direction de l'antenne réceptrice 21 et que l'antenne réceptrice 21 reçoive les ondes électromagnétiques 4 émises par l'antenne émettrice 11.

Alternativement, le dispositif de déplacement 3 peut comporter un système de pilotage automatique 26 de l'aéronef 20 commandant des déplacements de l'aéronef 20 dans son ensemble pour positionner et orienter de façon adéquate l'antenne réceptrice 21.

Dans tous les cas, le dispositif de déplacement 3 est relié au dispositif de localisation 2 de façon filaire ou non filaire.

Le dispositif de localisation 2 peut comporter un premier dispositif de localisation 25 par satellites agencé sur l'aéronef 20 et un second dispositif de localisation 15 par satellites agencé sur la station d'alimentation 10, les premier et second dispositifs de localisation 25,15 estimant respectivement la position de l'aéronef 20 et de la station d'alimentation 10 dans un repère terrestre. Le dispositif de localisation 2 comporte également un dispositif de communication 6 permettant de transférer les coordonnées dans le repère terrestre de l'aéronef 20 et/ou de la station d'alimentation 10 entre la station d'alimentation 10 et l'aéronef 20. Le dispositif de communication 6 peut par exemple comporter un premier émetteur-récepteur 29 agencé sur l'aéronef 20. Le dispositif de communication 6 peut comporter un second émetteur-récepteur 19 agencé sur la station d'alimentation 10 et coopérant avec le premier émetteur-récepteur 29.

Le dispositif de localisation 2 comporte aussi un calculateur 5 déterminant une position relative de l'aéronef 20, et donc de l'antenne réceptrice 21, par rapport à la station d'alimentation 10, et donc à l'antenne émettrice 11, à partir des positions de l'aéronef 20 et de la station d'alimentation 10 dans le repère terrestre. Le calculateur 5 peut être agencé dans l'aéronef 20 ou dans la station d'alimentation 10.

Le calculateur 5 peut comporter au moins un processeur et au moins une mémoire, au moins un circuit intégré, au moins un système programmable ou bien au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, la station d'alimentation 10 peut être fixe et sa position dans le repère terrestre peut être connue. Les coordonnées de la station d'alimentation 10 dans le repère terrestre peuvent par exemple être stockées dans une mémoire du calculateur 5. Le dispositif de localisation 2 peut alors comporter uniquement le premier dispositif de localisation 25 par satellites agencé sur l'aéronef 20, le dispositif de communication 6 et le calculateur 5. Le second dispositif de localisation 15 par satellites agencé sur la station d'alimentation 10 n'est dans ce cas pas nécessaire.

Selon un autre exemple, le dispositif de localisation 2 peut comporter un dispositif de localisation relative 7 agencé sur l'aéronef 20 ou sur la station d'alimentation 10. Le dispositif de localisation relative 7 est configuré pour fournir directement une position relative de l'aéronef 20 par rapport à la station d'alimentation 10.

Le dispositif de localisation relative 7 peut comporter un dispositif de type optique. Le dispositif de localisation relative 7 comporte par exemple un dispositif optique de type LIDAR pour la désignation en langue anglaise « Light Détection And Ranging »ou de type LEDDAR pour la désignation en langue anglaise « LED Détection And Ranging ». Le dispositif de localisation relative 7 peut alternativement comporter une caméra et un calculateur appliquant une méthode d'analyse d'images et de reconnaissance de formes afin de déterminer la position relative de l'aéronef 20 par rapport à la station d'alimentation 10. Le dispositif de localisation relative 7 peut alternativement comporter un dispositif à infrarouge.

Le dispositif de localisation relative 7 peut alternativement comporter un dispositif de type radar ou un dispositif à ultrasons.

Le dispositif de localisation relative 7 peut alternativement utiliser la quantité d'énergie reçue par l'antenne réceptrice 21. Par exemple, si la quantité d'énergie reçue est inférieure à un seuil d'énergie minimum que devrait recevoir l'antenne réceptrice 21, ce seuil d'énergie étant fonction de l'énergie contenue dans les ondes électromagnétiques émises par l'antenne émettrice 11, le dispositif de déplacement 3 modifie l'orientation de l'antenne émettrice 11 ou de l'antenne réceptrice 21 afin que la quantité d'énergie reçue devienne supérieure ou égale au seuil d'énergie minimum.

Par ailleurs, l'aéronef 20 peut comporter une ou plusieurs sources d'énergie électrique 28 embarquées destinées à alimenter en énergie électrique l'installation motrice 22, et en particulier les moteurs électriques 27. Cette source d'énergie électrique 28 peut permettre d'alimenter électriquement l'installation motrice 22 si l'antenne réceptrice 21 ne reçoit pas d'onde électromagnétique émise par l'antenne émettrice 11 ou en cas de dysfonctionnement de l'antenne réceptrice 21. Une telle source d'énergie électrique 28 constitue ainsi une source d'énergie électrique de secours.

Une source d'énergie électrique 28 peut comporter par exemple un dispositif de stockage d'énergie électrique rechargeable tel qu'une batterie ou un supercondensateur, une pile à combustible ou encore un moteur thermique couplé à un générateur électrique. Un dispositif de stockage d'énergie électrique rechargeable peut éventuellement être rechargé lorsque l'antenne réceptrice 21 reçoit des ondes électromagnétiques et que l'aéronef 20 n'utilise pas la totalité de l'énergie électrique générée.

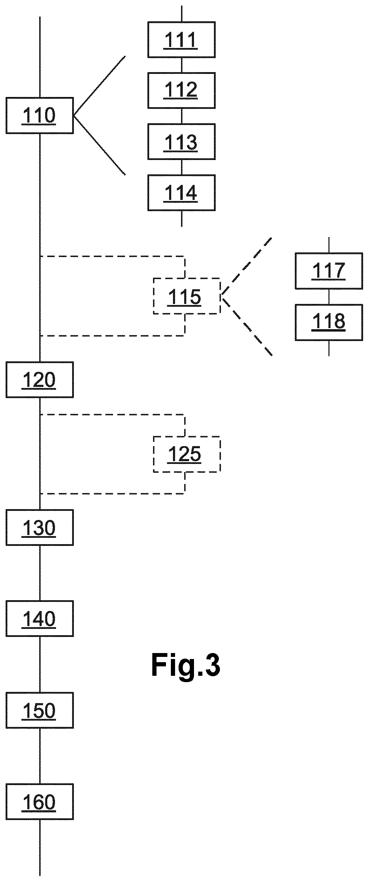

En outre, le système 1 est configuré pour mettre en oeuvre un procédé d'alimentation à distance en énergie électrique d'un aéronef 20 dont un schéma synoptique est représenté sur la figure 3. Ce procédé comporte les étapes suivantes :
- localisation 110 d'une antenne réceptrice 21 de l'aéronef 20 par rapport à une antenne émettrice 11 d'une station d'alimentation 10 par l'intermédiaire du dispositif de localisation 2,
- positionnement 120 d'une antenne parmi l'antenne émettrice 11 et l'antenne réceptrice 21 en fonction de la position de l'autre antenne parmi l'antenne émettrice 11 et l'antenne réceptrice 21 par l'intermédiaire du dispositif de déplacement 3,
- émission 130 d'ondes électromagnétiques 4 par l'intermédiaire de l'antenne émettrice 11 d'une station d'alimentation 10 vers l'antenne réceptrice 21 de l'aéronef 20,
- réception 140 des ondes électromagnétiques 4 par l'intermédiaire de l'antenne réceptrice 21 de l'aéronef 20,
- transformation 150 des ondes électromagnétiques 4 reçues par l'antenne réceptrice 21 en un courant électrique par l'intermédiaire par exemple de récepteurs transducteurs photovoltaïques lorsque les ondes électromagnétiques 4 sont formées par un faisceau laser de puissance ou d'au moins une antenne redresseuse lorsque les ondes électromagnétiques 4 sont formées par des ondes millimétriques, et
- alimentation 160 de l'installation motrice 22 de l'aéronef 20 par le courant électrique.

En outre, le procédé peut comporter une étape d'adaptation 125 de l'énergie contenue dans les ondes électromagnétiques 4 en fonction du besoin en énergie électrique de l'aéronef 20. En effet, la quantité d'énergie réceptionnée par l'antenne réceptrice 21 est fonction de la quantité d'énergie contenue dans les ondes électromagnétiques 4 émises par l'antenne émettrice 11 et de la distance entre l'antenne réceptrice 21 et l'antenne émettrice 11, la quantité d'énergie réceptionnée par l'antenne réceptrice 21 diminuant lorsque cette distance augmente.

La station d'alimentation 10 peut comporter un dispositif de gestion d'énergie 18 utilisé lors de cette étape d'adaptation 125 afin de gérer la quantité d'énergie contenue dans les ondes électromagnétiques 4 émises par l'antenne émettrice 11 et d'optimiser ainsi la quantité d'énergie reçue par l'antenne réceptrice 21 de sorte qu'elle soit sensiblement égale au besoin en énergie de l'aéronef 20. Les émissions des ondes électromagnétiques 4 par l'antenne émettrice 11 sont ainsi coordonnées avec le déplacement de l'aéronef 20 et l'énergie contenue dans les ondes électromagnétiques 4 est adaptée au besoin de l'aéronef, fonction notamment des dimensions de l'aéronef 20 et de la charge utile transportée.

Le besoin en énergie de l'aéronef 20 peut être prédéfini, une information relative à ce besoin en énergie de l'aéronef 20 étant stockée par exemple dans une mémoire du calculateur 5. Ce besoin en énergie de l'aéronef 20 peut également être fourni par l'aéronef 20 au système 1 ou à la station d'alimentation 10 par l'intermédiaire du dispositif de communication 6.

Par ailleurs, l'étape de localisation 110 peut comporter les sous-étapes suivantes :
- localisation 111 de l'antenne réceptrice 21 dans un repère terrestre par l'intermédiaire du premier dispositif de localisation 25 par satellites agencé sur l'aéronef 20,
- localisation 112 de l'antenne émettrice 11 dans le repère terrestre par l'intermédiaire du second dispositif de localisation 15 par satellites agencé sur la station d'alimentation 10, et
- détermination 114 d'une position relative de l'antenne réceptrice 21 par rapport à l'antenne émettrice 11 en fonction de la localisation de la station d'alimentation 10 et de la localisation de l'aéronef 20 dans le repère terrestre.

L'étape de localisation 110 peut aussi comporter une sous-étape de communication 113 entre la station d'alimentation 10 et l'aéronef 20 par l'intermédiaire du dispositif de communication 6 afin de fournir à la station d'alimentation 10 ou à l'aéronef 20 la position de l'antenne réceptrice 21 ou de l'antenne émettrice 11 dans le repère terrestre.

Le procédé peut comporter une étape de secours 115 au cours de laquelle la position relative de l'antenne réceptrice 21 par rapport à l'antenne émettrice 11 est déterminée par l'intermédiaire d'un dispositif de localisation de secours 8 du système 1. L'étape de secours 115 peut être réalisée en cas d'échec de l'étape de localisation 110.

Le dispositif de localisation de secours 8 est configuré pour fournir une position relative de l'aéronef 20 par rapport à la station d'alimentation 10. Le dispositif de localisation de secours 8 peut être agencé sur l'aéronef 20 ou sur la station d'alimentation 10. Le dispositif de localisation de secours 8 peut comporter un dispositif de type optique, un dispositif de type radar ou un dispositif à ultrasons par exemple pour déterminer la position relative de l'aéronef 20 par rapport à la station d'alimentation 10. Le dispositif de localisation de secours 8 peut également utiliser une trajectoire prévisionnelle de l'aéronef 20 pour estimer les positions prédictives successives de l'aéronef 20, et donc les positions prédictives successives de l'antenne réceptrice 21, en fonction de la dernière position connue de l'aéronef 20 et de cette trajectoire prévisionnelle de l'aéronef 20.

Dans ce cas, l'étape de secours 115 comporte une sous-étape d'enregistrement 117 de la position relative de l'aéronef 20 par rapport à la station d'alimentation 10. Le dispositif de localisation 2 détermine cette position relative. La position relative est alors enregistrée par exemple dans une mémoire du calculateur 5.

L'étape de secours 115 peut comporter une sous-étape d'estimation 118 pour estimer les positions prédictives successives de l'aéronef 20 par rapport à la station d'alimentation 10. Dès que le dispositif de localisation 2 ne fournit pas de position relative ou dès qu'un dysfonctionnement du dispositif de localisation 2 est détecté, le calculateur 5 peut estimer les positions prédictives successives de l'aéronef 20 en utilisant sa dernière position relative enregistrée et une trajectoire prévisionnelle de l'aéronef 20 préalablement définie et stockée dans la mémoire du calculateur 5 par exemple. Une telle trajectoire prévisionnelle de l'aéronef 20 peut être définie, préalablement au décollage de l'aéronef 20 voire peut être modifiée en vol. En outre, l'aéronef 20 pouvant évoluer de façon autonome, cette trajectoire prévisionnelle est suivie de façon stricte par l'aéronef 20. Dès lors, le calculateur 5 peut estimer, les positions prédictives successives de l'aéronef 20 par rapport à la station d'alimentation 10 à partir de la dernière position relative connue. Le dispositif de déplacement 3 oriente alors successivement l'antenne réceptrice 21 ou l'antenne émettrice 11 en fonction non plus d'une position relative mesurée mais de positions prédictives successives de l'aéronef 20.

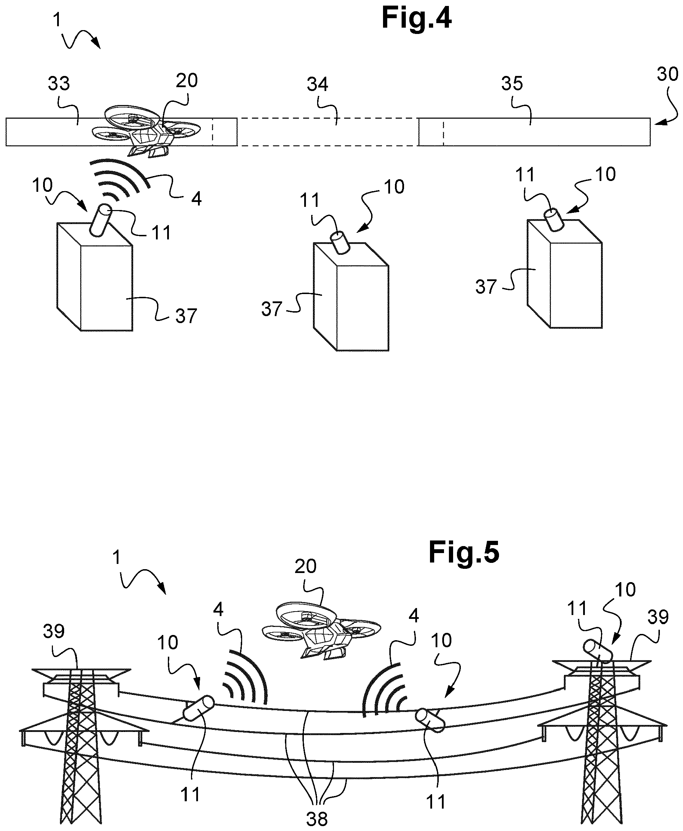

Par ailleurs, le système 1 comporte une pluralité de stations d'alimentation 10 définissant un cheminement 30 suivi par l'aéronef 20, comme représenté sur la figure 4. Chaque station d'alimentation 10 couvre un segment 33, 34, 35 du cheminement 30. L'antenne réceptrice 21 de l'aéronef 20 est toujours dans le champ de l'antenne émettrice 11 d'au moins une station d'alimentation 10 lorsque l'aéronef 20 se trouve sur un segment 31-36. De la sorte, l'aéronef 20 évolue le long du cheminement 30 en étant alimenté électriquement en permanence par au moins une station d'alimentation 10, l'antenne réceptrice 21 de l'aéronef 20 recevant des ondes électromagnétiques 4 émises par l'antenne émettrice 11 d'au moins une station d'alimentation 10. L'aéronef 20 n'utilise ainsi avantageusement aucune source d'énergie embarquée lorsque l'aéronef 20 vole sur le cheminement 30.

Le système 1 met en œuvre un procédé de déplacement de l'aéronef 20 selon le cheminement 30 avec une alimentation à distance de l'aéronef 20. Le procédé de déplacement applique le procédé d'alimentation précédemment décrit pour alimenter à distance à chaque instant en énergie électrique l'aéronef 20 par l'intermédiaire d'au moins une station d'alimentation 10.

Le cheminement 30 peut être situé au moins partiellement au dessus de bâtiments 37, notamment au-dessus d'une ville, comme représenté sur la figure 4. Une station d'alimentation 10 peut alors être agencée par exemple sur le toit d'un bâtiment 37.

Le cheminement 30 peut aussi être situé au moins partiellement au dessus d'une ligne 38 de transport de courant électrique à haute tension ou à très haute tension, comme représenté sur la figure 5. Une station d'alimentation 10 peut alors être agencée sur un pylône 39 supportant la ligne 38 de transport de courant électrique ou bien entre deux câbles de cette ligne 38 de transport de courant électrique par exemple. La station d'alimentation 10 peut éventuellement être alimentée directement par le courant électrique circulant dans la ligne 38 de transport de courant électrique.

Le cheminement 30 peut être uniquement un cheminement de transit pour les aéronefs 20, le cheminement 30 ne comportant pas de terrain d'atterrissage ou d'hélipad. Les aéronefs 20 sont ainsi alimentés en énergie électrique en sollicitant les stations d'alimentation 10 le long du cheminement 30, et par une source d'énergie embarquée en dehors du cheminement 30.

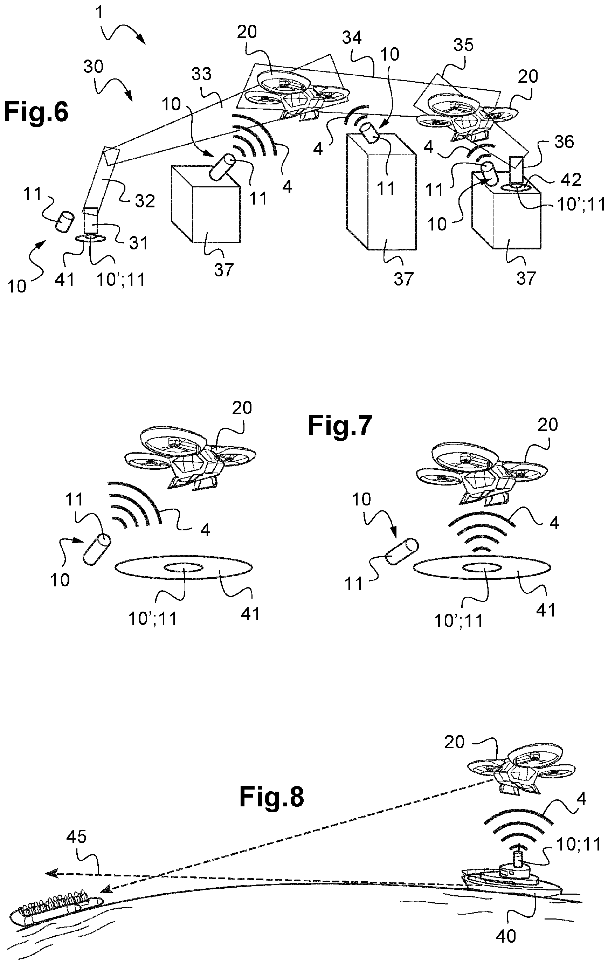

Alternativement, le cheminement 30 peut s'étendre entre deux hélipads 41,42, situés par exemple respectivement aux deux extrémités du cheminement 30, comme représenté sur la figure 6. Le cheminement 30 est ainsi situé entre les deux hélipads 41,42 de sorte que l'aéronef 20 puisse effectuer un vol entre les deux hélipads 41,42 sans utiliser de source d'énergie embarquée, l'antenne réceptrice 21 de l'aéronef 20 étant toujours dans le champ de l'antenne émettrice 11 d'au moins une station d'alimentation 10.

La hauteur de vol et les distances entre les stations d'alimentation peuvent être déterminées en fonction notamment des besoins énergétiques de l'aéronef 20 ainsi que les dimensions choisies pour les antennes émettrices 11 et réceptrices 21.

Une station d'alimentation 10 est agencée sur chaque hélipad 41,42 afin de permettre le décollage et l'atterrissage de l'aéronef 20 en étant alimenté par une station d'alimentation 10, comme représenté sur la figure 7. Une première station d'alimentation 10 est par exemple agencée à l'extérieur de l'hélipad 41,42 et une seconde station d'alimentation 10' est agencée au centre de l'hélipad 41,42.

La première station d'alimentation 10 permet ainsi l'alimentation en énergie électrique de l'aéronef 20 lors d'une phase d'éloignement suite à un décollage ainsi que lors d'une phase d'approche en vue d'un atterrissage.

La seconde station d'alimentation 10' permet quand à elle l'alimentation en énergie électrique de l'aéronef 20 lorsque l'aéronef 20 est posé sur l'hélipad 41 avant le décollage et lorsque l'aéronef 20 s'élève de quelques mètres au-dessus de l'hélipad 41 pendant le décollage. La seconde station d'alimentation 10' permet également l'alimentation en énergie électrique de l'aéronef 20 lors de l'atterrissage, lorsque l'aéronef 20 est situé quelques mètres au-dessus de l'hélipad 41 et jusqu'au contact de l'aéronef 20 avec l'hélipad 41,42. La seconde station d'alimentation 10' peut ne pas comporter de dispositif de déplacement 3, l'antenne émettrice 11 pouvant émettre les ondes électromagnétiques 4 selon une direction fixe et sensiblement verticale.

En outre, deux segments 31-36 adjacents du cheminement 30 peuvent être en recouvrement au niveau d'une de leurs extrémités respectives. Lorsqu'un aéronef 20 vole suivant une telle extrémité, l'aéronef 20 est alors alimenté conjointement par les deux stations d'alimentation 10 couvrant ces segments adjacents simultanément via les ondes électromagnétiques 4 émises. Le besoin en énergie de l'aéronef 20 est alors couvert par les ondes électromagnétiques émises simultanément par les deux stations d'alimentation. Le passage de l'aéronef 20 d'un segment à l'autre segment 31-36 s'effectue ainsi avantageusement sans perte d'alimentation en énergie de l'aéronef 20.

En l'absence de recouvrement entre deux segments 31-36 adjacents, l'alimentation électrique de l'installation motrice 22 de l'aéronef 20 entre ces deux segments 31-36 adjacents peut être assurée par une source d'énergie électrique 28 embarquée, telle qu'une batterie par exemple.

Plusieurs aéronefs 20 peuvent évoluer simultanément sur un cheminement 30. Chaque station d'alimentation 10 peut dans ce cas émettre un signal d'autorisation par l'intermédiaire d'un dispositif d'autorisation de la station d'alimentation 10 lorsque l'antenne émettrice 11 de cette station d'alimentation 10 n'émet pas d'onde électromagnétique 4 en direction d'une antenne réceptrice 21 d'un aéronef 20.

Le dispositif de communication 6 de chaque station d'alimentation 10 permet par exemple de transmettre ce signal d'autorisation à chaque aéronef 20 situé sur le cheminement 30 et éventuellement les autres stations d'alimentation 10 couvrant ce cheminement 30 de sorte que chaque aéronef 20 se trouvant sur un segment 31-36 du cheminement 30 soit informé si la station d'alimentation 10 couvrant le cheminement suivant est disponible ou utilisée par un autre aéronef 20 et adapte alors sa vitesse pour ralentir si nécessaire.

Par ailleurs, deux cheminements peuvent être agencés par exemple en parallèle et en sens inverse afin notamment d'éviter des conflits de trajectoire entre les aéronefs circulant dans des directions opposées, chaque cheminement étant à sens unique. Afin de couvrir indépendamment les deux cheminements 30, les stations d'alimentations 10 peuvent être doublées afin de couvrir indépendamment les deux cheminements. Chaque station d'alimentation 10 peut aussi comporter au moins deux antennes émettrices 11, chaque antenne émettrice 11 d'une station d'alimentation 10 couvrant un cheminement 30 distinct. Chaque antenne émettrice 11 d'une station d'alimentation 10 est ainsi dédiée à un cheminement spécifique parmi les deux cheminements parallèles.

Une station d'alimentation 10 peut être agencée sur un véhicule, par exemple un navire 40, comme représenté sur la figure 8. Cette station d'alimentation 10 est par exemple configurée afin d'alimenter un aéronef 20 volant au-dessus du navire 40 pour son fonctionnement. L'aéronef 20 peut par exemple être équipé d'une caméra afin d'élargir le champ de vision du navire 40, en lui permettant notamment d'avoir une vision au-delà de la ligne d'horizon 45 visible du navire 40.

La station d'alimentation 10 peut ne pas comporter de dispositif de déplacement 3, l'antenne émettrice 11 pouvant émettre les ondes électromagnétiques 4 selon une direction fixe vis-à-vis de la station d'alimentation 10. Cependant, cette station d'alimentation 10 se déplace avec le navire 40 et est notamment soumise aux mouvements de roulis et de tangage du navire 40.

L'aéronef 20 doit alors se déplacer en fonction des mouvements de la station d'alimentation 10, et donc du navire 40, afin de recevoir les ondes électromagnétiques 4 émises par l'antenne émettrice 11 de la station d'alimentation 10.

Dans ce but, le dispositif de localisation 2 comporte une centrale inertielle agencée sur le navire 40, voire sur la station d'alimentation 10, afin d'estimer les mouvements de la station d'alimentation 10. Le dispositif de déplacement 3 est agencé sur l'aéronef 20 et comporte un système de pilotage automatique 26 de l'aéronef 20 afin de déplacer l'aéronef 20. Ce système de pilotage automatique 26 comporte un calculateur qui est configuré pour piloter au moins un actionneur en fonction de la position relative des antennes et d'instructions mémorisées pour que l'antenne réceptrice 21 soit dans le champ d'émission de l'antenne émettrice 11.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système (1) pour alimenter en énergie électrique un aéronef (20) à distance, ledit système (1) comportant :
- au moins une station d'alimentation (10) reliée à une source d'énergie électrique (12) et munie d'une antenne émettrice (11) configurée pour émettre des ondes électromagnétiques (4),
- une antenne réceptrice (21) configurée pour être portée par ledit aéronef (20), ladite antenne réceptrice (21) étant configurée pour recevoir lesdites ondes électromagnétiques (4) et pour les transformer en un courant électrique alimentant une installation motrice (22) dudit aéronef (1),
ledit système (1) comportant un dispositif de localisation (2) configuré pour localiser ledit aéronef (20) par rapport à ladite antenne émettrice (11) et un dispositif de déplacement (3) pour déplacer une antenne parmi ladite antenne émettrice (11) et ladite antenne réceptrice (21) en fonction de la position de l'autre antenne parmi ladite antenne émettrice (11) et ladite antenne réceptrice (21),
**caractérisé en ce que** ledit système (1) comporte une pluralité de stations d'alimentation (10) définissant un cheminement (30) suivi par ledit aéronef (20), chaque station d'alimentation (10) couvrant un segment (31-36) dudit cheminement (30), ladite antenne réceptrice (21) étant toujours dans le champ de ladite antenne émettrice (11) d'au moins une station d'alimentation (10) le long dudit cheminement (30).

2. Système (1) selon la revendication 1,
**caractérisé en ce que** ladite l'antenne émettrice comporte un générateur (13) de faisceau laser, lesdites ondes électromagnétiques (4) étant formées par un faisceau laser de puissance et ladite antenne réceptrice (21) comportant des récepteurs transducteurs photovoltaïques.

3. Système (1) selon la revendication 1,
**caractérisé en ce que** ladite l'antenne émettrice comporte un générateur (14) d'ondes millimétriques, lesdites ondes électromagnétiques (4) étant formées par des ondes millimétriques et ladite antenne réceptrice (21) comportant au moins une antenne redresseuse.

4. Système (1) selon la revendication 3,
**caractérisé en ce que** ladite antenne émettrice (11) comporte une parabole (16) munie d'un dispositif de protection (17) configuré pour protéger l'environnement de ladite antenne émettrice (11) d'émissions secondaires issues desdites ondes électromagnétiques (4).

5. Système (1) selon l'une quelconque des revendications 1 à 4,
**caractérisé en ce que** ladite au moins une station d'alimentation (10) comporte un dispositif de gestion d'énergie (18) pour gérer une énergie contenue dans lesdites ondes électromagnétiques (4) émises par ladite antenne émettrice (11), ladite énergie contenue dans lesdites ondes électromagnétiques (4) étant fonction d'un besoin en énergie électrique dudit aéronef (20) et d'une distance entre ladite antenne réceptrice (21) dudit aéronef (20) et ladite antenne émettrice (11).

6. Système (1) selon l'une quelconque des revendications 1 à 5,
**caractérisé en ce que** ladite antenne réceptrice (21) est configurée pour être agencée sur une surface d'un fuselage (23) dudit aéronef (20).

7. Système (1) selon l'une quelconque des revendications 1 à 6,
**caractérisé en ce que** ledit dispositif de localisation (2) comporte un premier dispositif de localisation (25) par satellites agencé sur ledit aéronef (20), un second dispositif de localisation (15) par satellites agencé sur ladite au moins une station d'alimentation (10), un dispositif de communication (6,19,29) permettant un échange d'informations entre ladite au moins une station d'alimentation (10) et ledit aéronef (20) ainsi qu'un calculateur (5) déterminant une position relative dudit aéronef (20) par rapport à ladite au moins une station d'alimentation (10).

8. Système (1) selon l'une quelconque des revendications 1 à 6,
**caractérisé en ce que** ledit dispositif de localisation (2) comporte un premier dispositif de localisation (25) par satellites agencé sur ledit aéronef (20), un dispositif de communication (6,19,29) permettant un échange d'informations entre ladite au moins une station d'alimentation (10) et ledit aéronef (20) ainsi qu'un calculateur (5) déterminant une position relative dudit aéronef (20) par rapport à ladite au moins une station d'alimentation (10), ladite au moins une station d'alimentation (10) étant fixe.

9. Système (1) selon l'une quelconque des revendications 1 à 8,
**caractérisé en ce que** ledit dispositif de localisation (2) comporte un dispositif de localisation relative (7) agencé sur ledit aéronef (20) ou sur ladite station d'alimentation (21) et déterminant directement une position relative de ladite antenne réceptrice (21) par rapport à ladite antenne émettrice (11), ledit dispositif de localisation relative (7) étant de type optique, de type radar ou à ultrasons ou utilisant la quantité d'énergie reçue par ladite antenne réceptrice (21).

10. Système (1) selon l'une quelconque des revendications 1 à 9,
**caractérisé en ce que** ledit système (1) comporte un dispositif de localisation de secours (8) configuré pour fournir une position relative dudit aéronef (20) par rapport à ladite antenne émettrice (11) en cas de dysfonctionnement dudit dispositif de localisation (2), ledit dispositif de localisation de secours (8) étant agencé sur ledit aéronef (20) ou sur ladite station d'alimentation (21).

11. Système (1) selon l'une quelconque des revendications 1 à 10,
**caractérisé en ce que** ledit dispositif de déplacement (3) est agencé sur ladite au moins une station d'alimentation (10) et comporte un actionneur pour orienter ladite antenne émettrice (11) en fonction de la position relative de ladite antenne réceptrice (21) dudit aéronef (20) par rapport à ladite antenne émettrice (11).

12. Système (1) selon l'une quelconque des revendications 1 à 11,
**caractérisé en ce que** ledit dispositif de déplacement (3) est configuré pour être agencé sur ledit aéronef (20) et comporte un actionneur pour orienter ladite antenne réceptrice (21) en direction de ladite antenne émettrice (11).

13. Système (1) selon l'une quelconque des revendications 1 à 12,
**caractérisé en ce que** ledit dispositif de déplacement (3) est configuré pour être agencé sur ledit aéronef (20) et comporte un système de pilotage automatique (26) dudit aéronef (20) pour déplacer ledit aéronef (20), et par suite ladite antenne réceptrice (21), par rapport à ladite antenne émettrice (11).

14. Système (1) selon l'une quelconque des revendications 1 à 13,
**caractérisé en ce que** chaque station d'alimentation (10) comporte un dispositif d'autorisation pour émettre un signal d'autorisation lorsque ladite antenne émettrice (11) de ladite station d'alimentation (10) n'émet pas d'onde électromagnétique (4) en direction d'une antenne réceptrice (21) d'un aéronef (20) et chaque station d'alimentation (10) comporte un dispositif de communication (6) transmettant ledit signal d'autorisation à chaque aéronef (20) situé sur ledit cheminement (30).

15. Système (1) selon l'une quelconque des revendications 1 à 14,
**caractérisé en ce que** deux segments (31-36) adjacents dudit cheminement (30) sont en recouvrement au niveau d'une de leurs extrémités respectives et lorsqu'un aéronef (20) vole sur ladite extrémité, lesdites deux stations d'alimentation (10) couvrant lesdits segments adjacents émettent simultanément des ondes électromagnétiques (4) pour alimenter en énergie ledit aéronef (20).

16. Système (1) selon l'une quelconque des revendications 1 à 15,
**caractérisé en ce qu'**au moins une station d'alimentation (10) est configurée pour être agencée sur un toit d'un bâtiment (37), sur un pylône (39) supportant une ligne de transport (38) de courant électrique, une ligne de transport (38) de courant électrique, sur un terrain d'atterrissage (41) ou sur un véhicule.

17. Procédé de déplacement d'un aéronef (20) selon un cheminement (30) avec une alimentation à distance dudit aéronef (20),
**caractérisé en ce qu'**une pluralité de stations d'alimentation (10) sont agencée le long dudit cheminement (30), chaque station d'alimentation (10) étant munie d'une antenne émettrice (11) reliée à une source d'énergie électrique (12) et configurée pour émettre des ondes électromagnétiques (4),
ledit aéronef (20) comportant une antenne réceptrice (21) configurée pour recevoir lesdites ondes électromagnétiques (4) et pour les transformer en un courant électrique alimentant ledit aéronef (20),
ledit procédé comportant les étapes suivantes pour alimenter en énergie électrique un ledit aéronef (20) à distance par l'intermédiaire d'au moins une station d'alimentation (10), chaque station d'alimentation (10) couvrant un segment (31-36) dudit cheminement (30) de sorte que ladite antenne réceptrice (21) soit toujours dans le champ de ladite antenne émettrice (11) d'au moins une station d'alimentation (10) le long dudit cheminement (30) :
- localisation (110) d'une antenne réceptrice (21) dudit aéronef (20) par rapport à une antenne émettrice (11) d'une station d'alimentation (10) par l'intermédiaire d'un dispositif de localisation,
- positionnement (120) d'une antenne parmi ladite antenne émettrice (11) et ladite antenne réceptrice (21) en fonction de la position de l'autre antenne parmi ladite antenne émettrice (11) et ladite antenne réceptrice (21),
- émission (130) d'ondes électromagnétiques (4) par l'intermédiaire de ladite antenne émettrice (11) d'une station d'alimentation (10) vers ladite antenne réceptrice (21) dudit aéronef (20),
- réception (140) desdites ondes électromagnétiques (4) par l'intermédiaire de ladite antenne réceptrice (21) dudit aéronef (20),
- transformation (150) desdites ondes électromagnétiques (4) reçues par ladite antenne réceptrice (21) en un courant électrique, et
- alimentation (160) d'une installation motrice (22) dudit aéronef (20) par ledit courant électrique.

18. Procédé selon la revendication 17,
**caractérisé en ce que** lors de l'étape de positionnement (120), ladite antenne émettrice (11) est orientée vers ladite antenne réceptrice (21) en fonction de la position de ladite antenne réceptrice (21) par l'intermédiaire d'un dispositif de déplacement (3) agencé sur ladite station d'alimentation (10).

19. Procédé selon la revendication 18,
**caractérisé en ce que** lors de l'étape de positionnement (120), ladite antenne réceptrice (21) est orientée vers ladite antenne émettrice (11) en fonction de la position de ladite antenne émettrice (11) par l'intermédiaire d'un dispositif de déplacement (3) agencé sur ledit aéronef (20).

20. Procédé selon l'une quelconque des revendications 17 à 19,
**caractérisé en ce que** ledit procédé comporte une étape d'adaptation (125) de l'énergie contenue dans lesdites ondes électromagnétiques (4), ladite énergie étant fonction du besoin en énergie électrique dudit aéronef (20) et/ou d'une distance entre ladite antenne réceptrice (21) dudit aéronef (20) et ladite antenne émettrice (11).

21. Procédé selon l'une quelconque des revendications 17 à 20,
**caractérisé en ce que** ledit procédé comporte une étape de secours (115) au cours de laquelle ladite position relative de ladite antenne réceptrice (21) par rapport à ladite antenne émettrice (11) est déterminée par l'intermédiaire d'un dispositif de localisation de secours (8) ou par l'intermédiaire d'une estimation d'une position prédictive dudit aéronef (20) en fonction d'une trajectoire prévisionnelle dudit aéronef (20), ladite étape de secours étant réalisée en cas d'échec de ladite étape de localisation.

22. Procédé selon la revendication 21,
**caractérisé en ce que** ladite étape de secours (115) comporte les sous-étapes suivantes :
- enregistrement (117) de ladite position relative dudit aéronef (20) par rapport à ladite station d'alimentation (10), et
- estimation (118) de positions prédictives successives dudit aéronef (20) pour estimer lesdites positions prédictives successives dudit aéronef (20) par rapport à ladite station d'alimentation (10) par l'intermédiaire du calculateur (5), en utilisant ladite dernière position relative dudit aéronef (20) par rapport à ladite station d'alimentation (10) enregistrée et une trajectoire prévisionnelle dudit aéronef (20) préalablement définie.

23. Procédé de déplacement d'un aéronef (20) selon l'une quelconque des revendications 17 à 22,
**caractérisé en ce que** chaque station d'alimentation (10) émet un signal d'autorisation lorsque ladite antenne émettrice (11) de ladite station d'alimentation (10) n'émet pas une d'onde électromagnétique (4) en direction d'une antenne réceptrice (21) d'un aéronef (20) et chaque station d'alimentation (10) comporte un dispositif de communication (6) transmettant ledit signal d'autorisation à chaque aéronef (20) situé sur ledit cheminement (30).

24. Procédé de déplacement d'un aéronef (20) selon l'une quelconque des revendications 17 à 23,
**caractérisé en ce que** deux segments (31-36) adjacents dudit cheminement (30) sont en recouvrement au niveau d'une de leurs extrémités respectives et lorsqu'un aéronef (20) vole suivant une telle extrémité, lesdites deux stations d'alimentation (10) couvrant lesdits segments (31-36) adjacents alimentent simultanément et conjointement via les ondes électromagnétiques (4) émises ledit aéronef (20).

## Patentansprüche

1. System (1) zur Fernversorgung eines Luftfahrzeugs (20) mit elektrischer Energie, wobei das System (1) umfasst:
- mindestens eine Versorgungsstation (10), die mit einer elektrischen Energiequelle (12) verbunden und mit einer Sendeantenne (11) versehen ist, die zum Aussenden von elektromagnetischen Wellen (4) konfiguriert ist,
- eine Empfangsantenne (21), die konfiguriert ist, um von dem Luftfahrzeug (20) getragen zu werden, wobei die Empfangsantenne (21) zum Empfangen der elektromagnetischen Wellen (4) und zu deren Umwandlung in einen elektrischen Strom, der ein Triebwerk (22) des Luftfahrzeugs (1) speist, konfiguriert ist,
wobei das System (1) eine Ortungsvorrichtung (2), die konfiguriert ist, um das Flugzeug (20) in Bezug auf die Sendeantenne (11) zu Orten, und eine Bewegungsvorrichtung (3) zum Bewegen einer Antenne unter der Sendeantenne (11) und der Empfangsantenne (21) in Abhängigkeit von der Position der anderen Antenne unter der Sendeantenne (11) und der Empfangsantenne (21) umfasst,
**dadurch gekennzeichnet, dass** das System (1) eine Mehrzahl von Versorgungsstationen (10) umfasst, die einen von dem Luftfahrzeug (20) verfolgten Weg (30) definieren, wobei jede Versorgungsstation (10) ein Segment (31-36) des Wegs (30) abdeckt, wobei sich die Empfangsantenne (21) entlang des Wegs (30) immer im Feld der Sendeantenne (11) von mindestens einer Versorgungsstation (10) befindet.

2. System (1) nach Anspruch 1,
**dadurch gekennzeichnet, dass** die Sendeantenne einen Laserstrahlerzeuger (13) umfasst, die elektromagnetischen Wellen (4) durch einen Leistungslaserstrahl gebildet werden, und die Empfangsantenne (21) photovoltaische Wandlerempfänger umfasst.

3. System (1) nach Anspruch 1,
**dadurch gekennzeichnet, dass** die Sendeantenne einen Millimeterwellengenerator (14) umfasst, die elektromagnetischen Wellen (4) durch Millimeterwellen gebildet werden, und die Empfangsantenne (21) mindestens eine Gleichrichterantenne umfasst.

4. System (1) nach Anspruch 3,
**dadurch gekennzeichnet, dass** die Sendeantenne (11) eine Parabolantenne (16) umfasst, die mit einer Schutzvorrichtung (17) versehen ist, die konfiguriert ist, um die Umgebung der Sendeantenne (11) vor aus den elektromagnetischen Wellen (4) hervorgegangenen Sekundäremissionen zu schützen.

5. System (1) nach einem der Ansprüche 1 bis 4,
**dadurch gekennzeichnet, dass** die mindestens eine Versorgungsstation (10) eine Energieverwaltungsvorrichtung (18) umfasst, um eine in den von der Sendeantenne (11) gesendeten elektromagnetischen Wellen (4) enthaltene Energie zu verwalten, wobei die in den elektromagnetischen Wellen (4) enthaltene Energie von einem Bedarf an elektrischer Energie des Luftfahrzeugs (20) und von einem Abstand zwischen der Empfangsantenne (21) des Luftfahrzeugs (20) und der Sendeantenne (11) abhängt.

6. System (1) nach einem der Ansprüche 1 bis 5,
**dadurch gekennzeichnet, dass** die Empfangsantenne (21) zur Anbringung auf einer Oberfläche eines Rumpfes (23) des Luftfahrzeugs (20) konfiguriert ist.

7. System (1) nach einem der Ansprüche 1 bis 6,
**dadurch gekennzeichnet, dass** die Ortungsvorrichtung (2) eine an dem Luftfahrzeug (20) angeordnete erste Vorrichtung (25) zur Ortung mittels Satelliten, eine an der mindestens einen Versorgungsstation (10) angeordnete zweite Vorrichtung (25) zur Ortung mittels Satelliten, eine Kommunikationsvorrichtung (6, 19, 29), die einen Informationsaustausch zwischen der mindestens einen Versorgungsstation (10) und dem Luftfahrzeug (20) ermöglicht, sowie einen Rechner (5) umfasst, der eine relative Position des Luftfahrzeugs (20) in Bezug auf die mindestens eine Versorgungsstation (10) bestimmt.

8. System (1) nach einem der Ansprüche 1 bis 6,
**dadurch gekennzeichnet, dass** die Ortungsvorrichtung (2) eine an dem Luftfahrzeug (20) angeordnete erste Vorrichtung (25) zur Ortung mittels Satelliten, eine Kommunikationsvorrichtung (6, 19, 29), die einen Informationsaustausch zwischen der mindestens einen Versorgungsstation (10) und dem Luftfahrzeug (20) ermöglicht, sowie einen Rechner (5) umfasst, der eine relative Position des Luftfahrzeugs (20) in Bezug auf die mindestens eine Versorgungsstation (10) bestimmt, wobei die mindestens eine Versorgungsstation (10) ortsfest ist.

9. System (1) nach einem der Ansprüche 1 bis 8,
**dadurch gekennzeichnet, dass** die Ortungsvorrichtung (2) eine an dem Luftfahrzeug (20) oder an der Versorgungsstation (21) angeordnete Vorrichtung (7) zur relativen Ortung umfasst, die direkt eine relative Position der Empfangsantenne (21) in Bezug auf die Sendeantenne (11) bestimmt, wobei die Vorrichtung (7) zur relativen Ortung vom optischen Typ, vom Radartyp oder vom Ultraschalltyp ist oder die von der Empfangsantenne (21) empfangene Energiemenge nutzt.

10. System (1) nach einem der Ansprüche 1 bis 9,
**dadurch gekennzeichnet, dass** das System (1) eine Notfall-Ortungsvorrichtung (8) umfasst, die konfiguriert ist, um im Falle einer Funktionsstörung der Ortungsvorrichtung (2) eine relative Position des Flugzeugs (20) in Bezug auf die Sendeantenne (11) zu liefern, wobei die Notfall-Ortungsvorrichtung (8) an dem Flugzeug (20) oder an der Versorgungsstation (21) angeordnet ist.

11. System (1) nach einem der Ansprüche 1 bis 10,
**dadurch gekennzeichnet, dass** die Bewegungsvorrichtung (3) an der mindestens einen Versorgungsstation (10) angeordnet ist und einen Aktuator zum Ausrichten der Sendeantenne (11) in Abhängigkeit von der relativen Position der Empfangsantenne (21) des Luftfahrzeugs (20) in Bezug auf die Sendeantenne (11) aufweist.

12. System (1) nach einem der Ansprüche 1 bis 11,
**dadurch gekennzeichnet, dass** die Bewegungsvorrichtung (3) konfiguriert ist, um an dem Luftfahrzeug (20) angeordnet zu werden, und einen Aktuator zum Ausrichten der Empfangsantenne (21) in Richtung der Sendeantenne (11) umfasst.

13. System (1) nach einem der Ansprüche 1 bis 12,
**dadurch gekennzeichnet, dass** die Bewegungsvorrichtung (3) konfiguriert ist, um an dem Luftfahrzeug (20) angeordnet zu werden, und ein automatisches Steuerungssystem (26) des Luftfahrzeugs (20) zum Bewegen des Luftfahrzeugs (20) und folglich der Empfangsantenne (21) relativ zu der Sendeantenne (11) umfasst.

14. System (1) nach einem der Ansprüche 1 bis 13,
**dadurch gekennzeichnet, dass** jede Versorgungsstation (10) eine Freigabevorrichtung zum Senden eines Freigabesignals, wenn die Sendeantenne (11) der Versorgungsstation (10) keine elektromagnetische Welle (4) in Richtung einer Empfangsantenne (21) eines Luftfahrzeugs (20) sendet, aufweist, und jede Versorgungsstation (10) eine Kommunikationsvorrichtung (6) aufweist, die das Freigabesignal an jedes Luftfahrzeug (20) sendet, das sich auf dem Weg (30) befindet.

15. System (1) nach einem der Ansprüche 1 bis 14,
**dadurch gekennzeichnet, dass** zwei benachbarte Segmente (31-36) des Weges (30) sich an einem ihrer jeweiligen Enden überlappen, und dass, wenn ein Luftfahrzeug (20) an diesem Ende fliegt, die beiden Versorgungsstationen (10), die die benachbarten Segmente abdecken, gleichzeitig elektromagnetische Wellen (4) aussenden, um das Luftfahrzeug (20) mit Energie zu versorgen.

16. System (1) nach einem der Ansprüche 1 bis 15,
**dadurch gekennzeichnet, dass** mindestens eine Versorgungsstation (10) konfiguriert ist, um auf einem Dach eines Gebäudes (37), auf einem Mast (39), der eine Übertragungsleitung (38) für elektrischen Strom trägt, auf einer Übertragungsleitung (38) für elektrischen Strom, auf einem Landeplatz (41) oder auf einem Fahrzeug angeordnet zu werden.

17. Verfahren zum Bewegen eines Luftfahrzeugs (20) entlang eines Weges (30) mit einer Fernversorgung des Luftfahrzeugs (20),
**dadurch gekennzeichnet, dass** eine Mehrzahl von Versorgungsstationen (10) entlang des Weges (30) angeordnet ist, wobei jede Versorgungsstation (10) mit einer Sendeantenne (11) versehen ist, die mit einer elektrischen Energiequelle (12) verbunden und zum Aussenden von elektromagnetischen Wellen (4) konfiguriert ist,
das Luftfahrzeug (20) eine Empfangsantenne (21) aufweist, die zum Empfangen der elektromagnetischen Wellen (4) und zu deren Umwandlung in einen das Luftfahrzeug (20) versorgenden elektrischen Strom konfiguriert ist,
wobei das Verfahren zur Fernversorgung eines Luftfahrzeugs (20) mit elektrischer Energie über mindestens eine Versorgungsstation (10) die folgenden Schritte umfasst, wobei jede Versorgungsstation (10) ein Segment (31-36) des Wegs (30) abdeckt, so dass sich die Empfangsantenne (21) entlang des Weges (30) immer im Feld der Sendeantenne (11) von mindestens einer Versorgungsstation (10) befindet:
- Orten (110) einer Empfangsantenne (21) des Luftfahrzeugs (20) in Bezug auf eine Sendeantenne (11) einer Versorgungsstation (10) mittels einer Ortungsvorrichtung,
- Positionieren (120) einer Antenne unter der Sendeantenne (11) und der Empfangsantenne (21) in Abhängigkeit von der Position der anderen Antenne unter der Sendeantenne (11) und der Empfangsantenne (21),
- Senden (130) von elektromagnetischen Wellen (4) über die Sendeantenne (11) von einer Versorgungsstation (10) zu der Empfangsantenne (21) des Luftfahrzeugs (20),
- Empfangen (140) der elektromagnetischen Wellen (4) über die Empfangsantenne (21) des Luftfahrzeugs (20),
- Umwandeln (150) der von der Empfangsantenne (21) empfangenen elektromagnetischen Wellen (4) in einen elektrischen Strom, und
- Versorgen (160) eines Triebwerks (22) des Luftfahrzeugs (20) mit dem elektrischen Strom.

18. Verfahren nach Anspruch 17,
**dadurch gekennzeichnet, dass** beim Schritt des Positionierens (120) die Sendeantenne (11) in Abhängigkeit von der Position der Empfangsantenne (21) über eine an der Versorgungsstation (10) angeordnete Bewegungsvorrichtung (3) auf die Empfangsantenne (21) ausgerichtet wird.

19. Verfahren nach Anspruch 18,
**dadurch gekennzeichnet, dass** in dem Schritt des Positionierens (120) die Empfangsantenne (21) in Abhängigkeit von der Position der Sendeantenne (11) über eine an dem Luftfahrzeug (20) angeordnete Bewegungsvorrichtung (3) auf die Sendeantenne (11) ausgerichtet wird.

20. Verfahren nach einem der Ansprüche 17 bis 19,
**dadurch gekennzeichnet, dass** das Verfahren einen Schritt des Anpassens (125) der in den elektromagnetischen Wellen (4) enthaltenen Energie umfasst, wobei die Energie von dem Bedarf an elektrischer Energie des Luftfahrzeugs (20) und/oder von einem Abstand zwischen der Empfangsantenne (21) des Luftfahrzeugs (20) und der Sendeantenne (11) abhängig ist.

21. Verfahren nach einem der Ansprüche 17 bis 20,
**dadurch gekennzeichnet, dass** das Verfahren einen Notfallschritt (115) umfasst, bei dem die relative Position der Empfangsantenne (21) in Bezug auf die Sendeantenne (11) über eine Notfall-Ortungsvorrichtung (8) oder über eine Schätzung einer vorhergesagten Position des Luftfahrzeugs (20) in Abhängigkeit von einer vorhergesagten Flugbahn des Luftfahrzeugs (20) bestimmt wird, wobei der Notfallschritt im Falle eines Fehlschlags des Schritts des Ortens durchgeführt wird.

22. Verfahren nach Anspruch 21,
**dadurch gekennzeichnet, dass** der Notfallschritt (115) die folgenden Teilschritte umfasst:
- Aufzeichnen (117) der relativen Position des Luftfahrzeugs (20) in Bezug auf die Versorgungsstation (10), und
- Schätzen (118) aufeinanderfolgender vorhergesagter Positionen des Luftfahrzeugs (20), um die aufeinanderfolgenden vorhergesagten Positionen des Luftfahrzeugs (20) in Bezug auf die Versorgungsstation (10) zu schätzen, mittels des Rechners (5), unter Verwendung der letzten registrierten relativen Position des Luftfahrzeugs (20) in Bezug auf die Versorgungsstation (10) und einer vorher festgelegten vorhergesagten Flugbahn des Luftfahrzeugs (20).

23. Verfahren zum Bewegen eines Luftfahrzeugs (20) nach einem der Ansprüche 17 bis 22,
**dadurch gekennzeichnet, dass** jede Versorgungsstation (10) ein Freigabesignal aussendet, wenn die Sendeantenne (11) der Versorgungsstation (10) keine elektromagnetische Welle (4) in Richtung einer Empfangsantenne (21) eines Luftfahrzeugs (20) aussendet, und jede Versorgungsstation (10) eine Kommunikationsvorrichtung (6) umfasst, die das Freigabesignal an jedes Luftfahrzeug (20) überträgt, das sich auf dem Weg (30) befindet.

24. Verfahren zum Bewegen eines Luftfahrzeugs (20) nach einem der Ansprüche 17 bis 23,
**dadurch gekennzeichnet, dass** zwei benachbarte Segmente (31-36) des Weges (30) sich an einem ihrer jeweiligen Enden überlappen, und dass, wenn ein Luftfahrzeug (20) entlang eines solchen Endes fliegt, die zwei oder mehr Versorgungsstationen (10), die die benachbarten Segmente (31-36) überdecken, gleichzeitig und gemeinsam über die gesendeten elektromagnetischen Wellen (4) das Luftfahrzeug (20) versorgen.

## Claims

1. System (1) for remotely supplying electrical energy to an aircraft (20), said system (1) comprising:
- at least one power supply station (10) connected to a source of electrical energy (12) and equipped with a transmitting antenna (11) configured to transmit electromagnetic waves (4),
- a receiving antenna (21) configured to be carried by said aircraft (20), said receiving antenna (21) being configured to receive said electromagnetic waves (4) and to transform them into an electric current supplying a power plant (22) of said aircraft (1),
said system (1) comprising a locating device (2), configured to locate said aircraft (20) with respect to said transmitting antenna (11), and a movement device (3) for moving one antenna among said transmitting antenna (11) and said receiving antenna (21) according to the position of the other antenna among said transmitting antenna (11) and said receiving antenna (21),
**characterised in that** said system (1) comprises a plurality of power supply stations (10) defining a route (30) followed by said aircraft (20), each power supply station (10) covering a segment (31-36) of said route (30), said receiving antenna (21) always being within the range of said transmitting antenna (11) of at least one power supply station (10) along said route (30).

2. System (1) according to claim 1,
**characterised in that** said transmitting antenna comprises a laser beam generator (13), said electromagnetic waves (4) being formed by a power laser beam and said receiving antenna (21) comprising photovoltaic transducer receivers.

3. System (1) according to claim 1,
**characterised in that** said transmitting antenna comprises a generator (14) of millimetric waves, said electromagnetic waves (4) being formed by millimetric waves and said receiving antenna (21) comprising at least one rectenna.

4. System (1) according to claim 3,
**characterised in that** said transmitting antenna (11) comprises a parabola (16) equipped with a protection device (17) configured to protect the surroundings of said transmitting antenna (11) from secondary transmissions originating from said electromagnetic waves (4).

5. System (1) according to any one of claims 1 to 4,
**characterised in that** said at least one power supply station (10) comprises an energy management device (18) for managing energy contained in said electromagnetic waves (4) transmitted by said transmitting antenna (11), said energy contained in said electromagnetic waves (4) depending on a need for electrical energy of said aircraft (20) and on a distance between said receiving antenna (21) of said aircraft (20) and said transmitting antenna (11).

6. System (1) according to any one of claims 1 to 5,
**characterised in that** said receiving antenna (21) is configured to be arranged on a surface of a fuselage (23) of said aircraft (20).

7. System (1) according to any one of claims 1 to 6,
**characterised in that** said locating device (2) comprises a first satellite locating device (25) arranged on said aircraft (20), a second satellite locating device (15) arranged on said at least one power supply station (10), a communication device (6,19,29) allowing an exchange of information between said at least one power supply station (10) and said aircraft (20), as well as a calculator (5) determining a relative position of said aircraft (20) with respect to said at least one power supply station (10).

8. System (1) according to any one of claims 1 to 6,
**characterised in that** said locating device (2) comprises a first satellite locating device (25) arranged on said aircraft (20), a communication device (6,19,29) allowing an exchange of information between said at least one power supply station (10) and said aircraft (20), as well as a calculator (5) determining a relative position of said aircraft (20) with respect to said at least one power supply station (10), said at least one power supply station (10) being stationary.

9. System (1) according to any one of claims 1 to 8,
**characterised in that** said locating device (2) comprises a relative locating device (7) arranged on said aircraft (20) or on said power supply station (21) and directly determining a relative position of said receiving antenna (21) with respect to said transmitting antenna (11), said relative locating device (7) being an optical type, a radar type or a type with ultrasounds or one using the quantity of energy received by said receiving antenna (21).

10. System (1) according to any one of claims 1 to 9,
**characterised in that** said system (1) comprises a backup locating device (8) configured to provide a relative position of said aircraft (20) with respect to said transmitting antenna (11) in the event of dysfunctioning of said locating device (2), said backup locating device (8) being arranged on said aircraft (20) or on said power supply station (21).

11. System (1) according to any one of claims 1 to 10,
**characterised in that** said movement device (3) is arranged on said at least one power supply station (10) and comprises an actuator for directing said transmitting antenna (11) according to the relative position of said receiving antenna (21) of said aircraft (20) with respect to said transmitting antenna (11).

12. System (1) according to any one of claims 1 to 11,
**characterised in that** said movement device (3) is configured to be arranged on said aircraft (20) and comprises an actuator for directing said receiving antenna (21) in the direction of said transmitting antenna (11).

13. System (1) according to any one of claims 1 to 12,
**characterised in that** said movement device (3) is configured to be arranged on said aircraft (20) and comprises an autopilot system (26) of said aircraft (20) so as to move said aircraft (20) and consequently said receiving antenna (21) with respect to said transmitting antenna (11).

14. System (1) according to any one of claims 1 to 13,
**characterised in that** each power supply station (10) comprises an authorisation device for transmitting an authorisation signal when said transmitting antenna (11) of said power supply station (10) does not transmit any electromagnetic wave (4) in the direction of a receiving antenna (21) of an aircraft (20) and each power supply station (10) comprises a communication device (6) transmitting said authorisation signal to each aircraft (20) situated on said route (30).

15. System (1) according to any one of claims 1 to 14,
**characterised in that** two adjacent segments (31-36) of said route (30) overlap at one of their respective ends and when an aircraft (20) flies over said end, said two power supply stations (10) covering said adjacent segments simultaneously transmit electromagnetic waves (4) so as to supply said aircraft (20) with energy.

16. System (1) according to any one of claims 1 to 15,
**characterised in that** at least one power supply station (10) is configured to be arranged on a roof of a building (37), on a pylon (39) supporting a line (38) transmitting electric current, a line (38) transmitting electric current, on a landing area (41) or on a vehicle.

17. Method for moving an aircraft (20) along a route (30) with a remote power supply to said aircraft (20),
**characterised in that** a plurality of power supply stations (10) are arranged along said route (30), each power supply station (10) being equipped with a transmitting antenna (11) connected to a source of electric energy (12) and configured to transmit electromagnetic waves (4),
said aircraft (20) comprising a receiving antenna (21) configured to receive said electromagnetic waves (4) and to transform them into an electric current supplying said aircraft (20),
said method comprising the following steps for remotely supplying electrical energy to a said aircraft (20) by means of at least one power supply station (10), each power supply station (10) covering a segment (31-36) of said route (30) such that said receiving antenna (21) is always within the range of said transmitting antenna (11) of at least one power supply station (10) along said route (30):
- locating (110) a receiving antenna (21) of said aircraft (20) with respect to a transmitting antenna (11) of a power supply station (10) by means of a locating device,
- positioning (120) an antenna among said transmitting antenna (11) and said receiving antenna (21) according to the position of the other antenna among said transmitting antenna (11) and said receiving antenna (21),
- transmitting (130) electromagnetic waves (4) by means of said transmitting antenna (11) from a power supply station (10) to said receiving antenna (21) of said aircraft (20),
- receiving (140) said electromagnetic waves (4) by means of said receiving antenna (21) of said aircraft (20),
- transforming (150) said electromagnetic waves (4) received by said receiving antenna (21) into an electric current, and
- supplying (160) a power plant (22) of said aircraft (20) with said electric current.

18. Method according to claim 17,
**characterised in that** during the positioning step (120), said transmitting antenna (11) is directed towards said receiving antenna (21) according to the position of said receiving antenna (21) by means of a movement device (3) arranged on said power supply station (10).

19. Method according to claim 18,
**characterised in that** during the positioning step (120), said receiving antenna (21) is directed towards said transmitting antenna (11) according to the position of said transmitting antenna (11) by means of a movement device (3) arranged on said aircraft (20).

20. Method according to any one of claims 17 to 19,
**characterised in that** said method comprises a step (125) for adjusting the energy contained in said electromagnetic waves (4), said energy depending on the need for electrical energy of said aircraft (20) and/or on a distance between said receiving antenna (21) of said aircraft (20) and said transmitting antenna (11).

21. Method according to any one of claims 17 to 20,
**characterised in that** said method comprises a backup step (115) during which said relative position of said receiving antenna (21) with respect to said transmitting antenna (11) is determined by means of a backup locating device (8) or by means of an estimation of a predictive position of said aircraft (20) depending on a forecast position of said aircraft (20), said backup step being performed in the event of failure of said locating step.

22. Method according to claim 21,
**characterised in that** said backup step (115) comprises the following substeps:
- recording (117) of said relative position of said aircraft (20) with respect to said power supply station (10), and
- estimation (118) of successive predictive positions of said aircraft (20) so as to estimate said successive predictive positions of said aircraft (20) with respect to said power supply station (10) by means of the calculator (5), using said last recorded relative position of said aircraft (20) with respect to said power supply station (10) and a forecast trajectory of said aircraft (20) defined beforehand.

23. Method for moving an aircraft (20) according to any one of claims 17 to 22, **characterised in that** each power supply station (10) transmits an authorisation signal when said transmitting antenna (11) of said power supply station (10) does not transmit any electromagnetic wave (4) in the direction of a receiving antenna (21) of an aircraft (20) and each power supply station (10) comprises a communication device (6) transmitting said authorisation signal to each aircraft (20) situated on said route (30).

24. Method for moving an aircraft (20) according to any one of claims 17 to 23, **characterised in that** two adjacent segments (31-36) of said route (30) overlap at one of their respective ends and when an aircraft (20) flies along such an end, said two power supply stations (10) covering said adjacent segments (31-36) simultaneously and jointly supply said aircraft (20) via the transmitted electromagnetic waves (4).
